(19) **Europäisches Patentamt**
**European Patent Office**
**Office européen des brevets**

(11) **EP 2 012 525 B1**

(12) **EUROPEAN PATENT SPECIFICATION**

(45) Date of publication and mention
of the grant of the patent:
**20.06.2012 Bulletin 2012/25**

(51) Int Cl.:
***H04N 1/60*** (2006.01)

(21) Application number: **08158661.2**

(22) Date of filing: **20.06.2008**

(54) **Color conversion device, method of conversion, image formation system and program**

Farbumwandlungsvorrichtung, Umwandlungsverfahren, Bildformungssystem und Programm

Dispositif de conversion de couleur, procédé de conversion, système de formation d'image et programme

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.07.2007 JP 2007175011**

(43) Date of publication of application:
**07.01.2009 Bulletin 2009/02**

(73) Proprietor: **Dainippon Screen Mfg. Co., Ltd.**
**Kyoto-shi, Kyoto 602-8285 (JP)**

(72) Inventor: **Mizukami, Sachiko**
**c/o Dainippon Screen Mfg. Co., Ltd.**
**Kyoto 602-8585 (JP)**

(74) Representative: **Wilhelms · Kilian & Partner**
**Patentanwälte**
**Eduard-Schmid-Straße 2**
**81541 München (DE)**

(56) References cited:
**EP-A2- 1 156 668        JP-A- 2004 080 266**
**US-A- 5 331 440        US-A- 5 508 827**
**US-A- 5 999 703        US-A1- 2003 025 924**
**US-B1- 6 236 817        US-B1- 6 873 434**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a technique for converting image data into data color-matched to a predetermined output device.

Description of the Background Art

For various image formation apparatuses which use ink to form images on media, it is desirable to minimize the amount of ink for use in image formation from the viewpoint of running costs. Image formation apparatuses such as ink-jet printers which spray ink particles onto paper to thereby perform printing present problems such that the large amount of ink causes set-off and produces wrinkles due to insufficient drying. To avoid these problems, there has been a need for a technique which accomplishes the reduction in the amount of ink.

In view of such circumstances, there have been proposed various techniques related to the reduction in the amount of ink. As an example, there has been proposed a technique for outputting a print after performing a conversion process for increasing lightness and reducing chromaticness upon input image data when the amount of remaining ink becomes small, to thereby save the amount of ink for use in printing. An example of such a technique is disclosed in Japanese Patent Application Laid-Open No. 2006-148747.

There has also been proposed a technique for changing a masking coefficient for UCR (Under Color Removal) when the amount of remaining ink becomes small to control the effectiveness of the UCR, thereby suppressing the amount of use of ink which remains In small amounts. An example of such a technique is disclosed in Japanese Patent Application Laid-Open No. 9-265223 (1997).

The use of the above-mentioned techniques can produce some measure of effect In terms of the reduction In the amount of ink. However, the technique disclosed in Japanese Patent Application Laid-Open No. 2006-148747 is not capable of insuring the uniformity of the finished prints because this technique changes the values of the lightness and chromaticness of the input image data in accordance with the amount of remaining ink. Specifically, this technique is disadvantageous in that the color tone of the prints changes during printing when the amount of remaining Ink becomes small. Also, the technique disclosed in Japanese Patent Application Laid-Open No. 9-265223 (1997) is not capable of insuring the uniformity of color tones. In other words, the background art techniques have problems from the viewpoint of color management.

Additionally, the above-mentioned background art techniques are intended to continue printing with some degree of quality when the amount of remaining ink becomes small, and are not the techniques of accomplishing the constant reduction in the amount of ink.

Further, from US 5 999 703 A, a method for adjusting output device profiles for four-color devices such as offset presses is known. According to this method a base profile is selected first. This base profile produces satisfactory color but does not have the desired amount of gray component replacement. The gray component replacement of the output profile is adjusted until it is at some desired level. A new output profile which produces the same color as the base profile but which has the desired degree of gray component replacement is then produced.

From US 6 236 817 B1, a prior art color image printing apparatus for processing image data so that the amount of developer used for the reproduction of an image is reduced is known. The apparatus includes a controller having a plurality of under color tables in which an under color concentration value for black developer, to be used as a substitute for color developer, corresponding to a common concentration value included in each of the three primary colors of yellow, magenta and cyan constituting a pixel display color of the original image, is set differently for a non-toner saving mode than for a toner-saving mode; for outputting an under color concentration value for black determined, corresponding to the common concentration value and net concentration data for yellow, magenta and cyan which are obtained by deducting the under color concentration value from concentration data of each pixel display color of the original image, from the under color table corresponding to the toner consumption, an engine for printing a color image on a recording medium with the concentration of developer per color corresponding to the net concentration data for yellow, magenta and cyan, and the under color concentration value for black outputted from the controller, and a toner consumption saving mode selection means for selecting one of the non-toner saving mode and the toner saving mode and outputting a selected toner consumption mode selection signal to the controller.

Further prior art is known from JP 2004-080266 A.

## SUMMARY OF THE INVENTION

The present invention is intended for a color conversion device for converting input image data into data color-matched to a predetermined output device. According to the present invention, the color conversion device comprises: a storage element for storing therein standard profiles for converting a coordinate value in a color space into a standard coordinate value in a CMYK color space color-matched to the predetermined output device; a correction profile acquisition element for acquiring correction profiles for converting a coordinate value in the color space into a correction coordinate value in a CMYK color space, based on the standard profiles, the correction profile acquisition element including a candidate coordinate value extraction element for extracting a candidate coordinate value, the candidate coordinate value being a coordinate value having a K component value greater than a K component value of the standard coordinate value, a C component value less than a C component value of the standard coordinate value, an M component value less than an M component value of the standard coordinate value and a Y component value less than a Y component value of the standard coordinate value, the candidate coordinate value being a coordinate value such that a color difference from the standard coordinate value is less than a first predetermined value, the candidate coordinate value being a coordinate value such that the minimum one of the C, M and Y component values thereof is less than a second predetermined value, a maximum K component value acquisition element for acquiring the K component value of the candidate coordinate value as a maximum K component value, a correction K component value acquisition element for acquiring a third predetermined value ranging between the K component value of the standard coordinate value and the maximum K component value as a correction K component value, a final candidate coordinate value extraction element for extracting final candidate coordinate values, each of the final candidate coordinate values being a coordinate value having a K component value equal to the correction K component value, a C component value less than the C component value of the standard coordinate value, an M component value less than the M component value of the standard coordinate value and a Y component value less than the Y component value of the standard coordinate value, and a correction coordinate value acquisition element for acquiring a coordinate value such that the color difference from the standard coordinate value is the minimum of all of the final candidate coordinate values as a correction coordinate value corresponding to the standard coordinate value; and a data conversion element for converting the input image data by using the correction profiles.

The correction profiles are used for the conversion of the input image data. The correction coordinate value stored in the correction profiles is increased in K component value and decreased in C, M and Y component values, as compared with the yet-to-be-corrected coordinate value (the standard coordinate value). The correction coordinate value is a value such that the color difference from the standard coordinate value is less than a predetermined value. This reduces the amount of ink required for printing while ensuring color matching to the output device

Preferably, the correction K component value acquisition element includes: a K component replacement percentage setting element for setting a K component replacement percentage in response to an input manipulation from a user, the K component replacement percentage being a value defining to what extent to increase the K component value of the correction coordinate value from the K component value of the standard coordinate value; and a correction K component value calculation element for calculating the correction K component value, based on the K component replacement percentage.

The correction K component value is calculated based on the K component replacement percentage. The adjustment of the K component replacement percentage allows the adjustment of to what extent to increase the K component value of the correction coordinate value from the K component value of the standard coordinate value. The more the K component is increased, the smaller the amount of ink required for printing is. In contrast to this, the suppression of the increment of the K component provides good image quality because of the heavy use of C, M and Y inks. Thus, whether to give a higher priority to the reduction in the amount of ink or to the improvement in image quality is arbitrarily controlled by adjusting the value of the K component replacement percentage.

Preferably, the K component replacement percentage setting element sets the K component replacement percentage at different values depending on hues.

The K component replacement percentage is set at different values depending on hues. This permits a selection for each hue as to whether to give a higher priority to the reduction in the amount of ink or to the improvement in image quality.

Preferably, the K component replacement percentage setting element includes: a hue replacement percentage setting element for setting the value of the K component replacement percentage for each predetermined hue region; and a replacement percentage interpolation element for setting the K component replacement percentage for a boundary region between adjacent hue regions at a value calculated by linear interpolation between the values of the K component replacement percentage set for the respective adjacent hue regions when the K component replacement percentage is set at different values for the adjacent hue regions.

When the K component replacement percentage is set at different values for adjacent hue regions, the K component replacement percentage for a boundary region between the adjacent hue regions is set at a value calculated by linear interpolation between the values of the K component replacement percentage set for the respective adjacent hue regions. This makes gradual the abrupt change in K component replacement percentage for the boundary region to prevent the deterioration of image quality resulting from the abrupt change in K component replacement percentage.

Preferably, the K component replacement percentage setting element sets the K component replacement percentage at different values depending on chromaticness, and sets the K component replacement percentage for a predetermined achromatic region at a maximum possible value taken as the K component replacement percentage.

The K component replacement percentage for a predetermined achromatic region is set at a maximum possible value taken as the K component replacement percentage. The K component value for the achromatic region is increased to a maximum. This causes the heavy use of the K ink for the image formation of the achromatic region to provide good color reproducibility in the achromatic region.

The present invention is also intended for a method of color conversion which converts input image data into data color-matched to a predetermined output device.

The present invention is also intended for a computer readable recording medium for storing a program which is stored in a computer including a CPU and a memory, the program being executed by the computer to thereby cause the computer to function as a color conversion device for converting input image data into data color-matched to a predetermined output device.

The present invention is also intended for an image formation system comprising: a predetermined ink-jet printer; and a color conversion device for converting input image data into data color-matched to the predetermined ink-jet printer. According to the present invention, the color conversion device includes a storage element for storing therein standard profiles for converting a coordinate value in a color space into a standard coordinate value in a CMYK color space color-matched to the predetermined ink-jet printer, a correction profile acquisition element for acquiring correction profiles for converting a coordinate value in the color space into a correction coordinate value in a CMYK color space, based on the standard profiles, the correction profile acquisition element including a candidate coordinate value extraction element for extracting a candidate coordinate value, the candidate coordinate value being a coordinate value having a K component value greater than a K component value of the standard coordinate value, a C component value less than a C component value of the standard coordinate value, an M component value less than an M component value of the standard coordinate value and a Y component value less than a Y component value of the standard coordinate value, the candidate coordinate value being a coordinate value such that a color difference from the standard coordinate value is less than a first predetermined value, the candidate coordinate value being a coordinate value such that the minimum one of the C, M and Y component values thereof is less than a second predetermined value, a maximum K component value acquisition element for acquiring the K component value of the candidate coordinate value as a maximum K component value, a correction K component value acquisition element for acquiring a third predetermined value ranging between the K component value of the standard coordinate value and the maximum K component value as a correction K component value, a final candidate coordinate value extraction element for extracting final candidate coordinate values, each of the final candidate coordinate values being a coordinate value having a K component value equal to the correction K component value, a C component value less than the C component value of the standard coordinate value, an M component value less than the M component value of the standard coordinate value and a Y component value less than the Y component value of the standard coordinate value, and a correction coordinate value acquisition element for acquiring a coordinate value such that the color difference from the standard coordinate value is the minimum of all of the final candidate coordinate values as a correction coordinate value corresponding to the standard coordinate value, and a data conversion element for converting the input image data by using the correction profiles to acquire output image data. The predetermined ink-jet printer includes a printing element for spraying ink particles onto a medium to output a print based on the output image data acquired from the color conversion device.

It is therefore an object of the present invention to provide a technique capable of reducing the amount of use of ink while satisfying color management requirements, i.e., ensuring suitable color-matching to an output device.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a diagram showing the construction of an image formation system according to a first preferred embodiment of the present invention;

Fig. 2 is a block diagram showing a functional construction implemented in a color conversion device and related to a color conversion process;

Fig. 3 is a diagram for illustrating a procedure for the color conversion process;

Fig. 4 illustrates the principle of the extraction of a coordinate value with a K component taking a maximum value;

Fig. 5 is a view showing an example of the layout of a replacement percentage acceptance screen;
Fig. 6 is a diagram showing the entire procedure for the process of acquiring correction profiles;
Fig. 7 is a diagram showing a procedure for the process of calculating a correction coordinate value;
Fig. 8 is a block diagram showing a functional construction implemented in the color conversion device and related to the color conversion process;
Fig. 9 is a view showing an example of the layout of the replacement percentage acceptance screen;
Figs. 10A and 10B show a relationship between hue and replacement percentage;
Fig. 11 is a diagram showing a procedure for the process of calculating a K component value; and
Figs. 12A and 12B show a relationship between chromaticness and replacement percentage.

DESCRIPTION OF THE PREFERRED EMBODIMENTS

[First Preferred Embodiment]

<1. Overall Construction of Image Formation System>

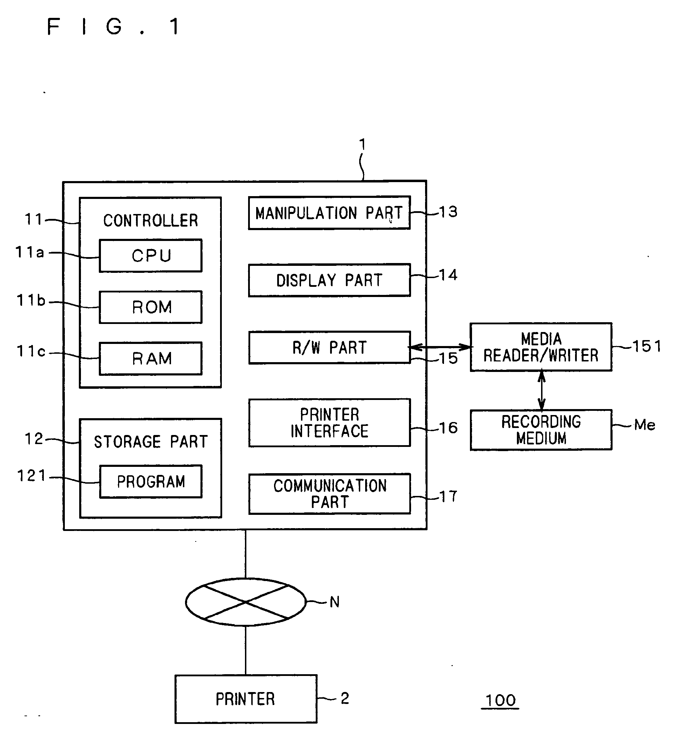

Fig. 1 is a diagram showing the construction of an image formation system 100 according to a first preferred embodiment of the present invention, and shows a principal hardware construction of a color conversion device 1. The image formation system 100 includes the color conversion device 1 and a printer 2 which are connected to each other through a communications circuit or network N.

First, the general outline of an image formation process in the image formation system 100 will be described. The color conversion device 1 converts image data (referred to hereinafter as "input image data" which is assumed herein to be "CMYK data") acquired by receiving from other external terminal devices (not shown) connected thereto through the network N and acquired by reading from a recording medium Me into CMYK data (referred to hereinafter as "output image data") color-matched to the printer 2 serving as an output device, and sends the output image data to the printer 2. The printer 2 prints the output image data acquired from the color conversion device 1 on recording paper.

The term "CMYK data" used herein refers to image data represented in a CMYK color system (or represented by coordinate values in a CMYK color space). The CMYK data represents the color of each pixel by the use of a parameter C indicating the gradation level of cyan, a parameter M indicating the gradation level of magenta, a parameter Y indicating the gradation level of yellow, and a parameter K indicating the gradation level of black.

Next, the construction of the devices will be described. The color conversion device 1 is constructed by a computer. More specifically, the color conversion device 1 principally includes: a controller 11 including a CPU 11a, a ROM 11b, and a RAM 11c and implementing functions to be described later; a storage part 12 for storing a program 121 for causing this computer to function as the color conversion device 1 and profiles to be described later therein; a manipulation part 13 including a mouse, a keyboard and the like for an operator to enter various commands; a display part 14 including a display device and the like; an R/W part 15 constructed by a hard disk and the like and for reading and writing data from and to the recording medium Me through a media reader/writer 151; a printer interface 16 for inputting image data (output image data ) to be printed together with a print instruction to the printer 2; and a communication part 17 serving as a communication interface for data transfer to and from other devices on the network N.

The printer 2 is constructed by an ink-jet printing device (or what is called an ink-jet printer). The printer 2 forms on printing paper an image based on the image data (output image data) received from the color conversion device 1. More specifically, the printer 2 forms on printing paper an image based on CMYK image data by ejecting fine (misty) ink particles (ink droplets) from a plurality of fine-diameter nozzle tips provided in a print head (not shown).

<2. Functional Construction of Color Conversion Device>

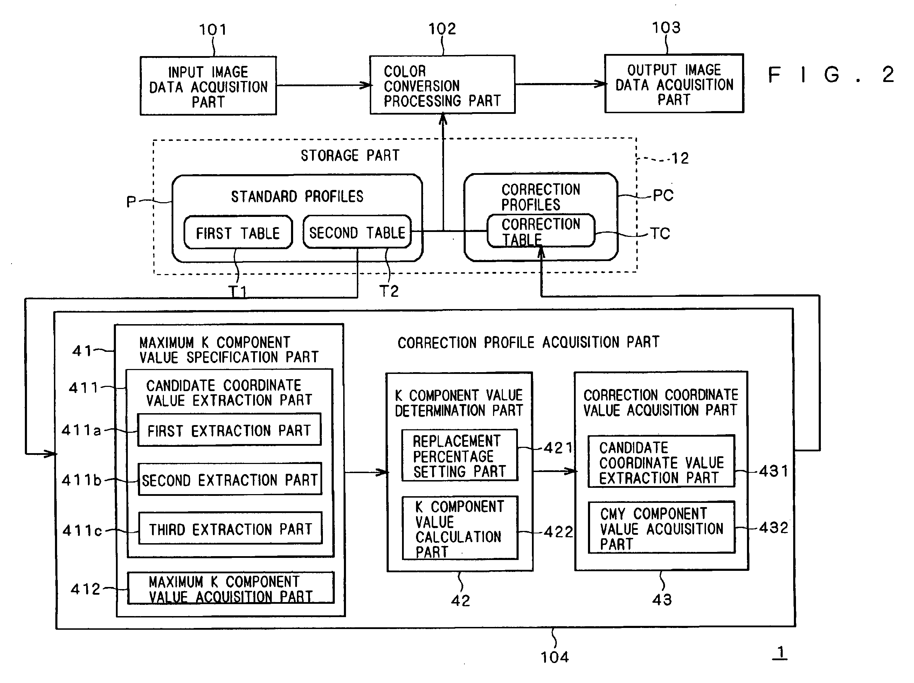

As mentioned above, the color conversion device 1 converts the input image data into the data color-matched to the printer 2. This conversion process is referred to hereinafter as a "color conversion process." Fig. 2 is a block diagram showing a functional construction implemented in the color conversion device 1 and related to the color conversion process.

The color conversion device 1 has the functional construction related to the color conversion process which includes: an input image data acquisition part 101, a color conversion processing part 102, an output image data acquisition part 103, and a correction profile acquisition part 104. These parts 101 to 104 are constituents implemented by the controller 11 executing the predetermined program 121 stored in the storage part 12 (or read from the recording medium Me).

The input image data acquisition part 101 acquires the input image data. More specifically, the input image data acquisition part 101 acquires the input image data by receiving the input image data from other external terminal devices connected through the network N or reading the input image data from the recording medium Me, as mentioned above.

The color conversion processing part 102 uses the profiles stored in the storage part 12 to perform the color conversion from the input image data acquired by the input image data acquisition part 101 into CMYK data color-matched to the printer 2 serving as the output device.

Typically, this color conversion process is performed in a manner to be described below. First, the input image data is converted into "Lab data" to be described later by using input profiles, so that intermediate data is acquired. The input profiles refer to profiles in accordance with target colors. When it is desired to represent offset colors on ink-jet printed materials and the like, profiles for offset printing are used. Subsequently, the acquired intermediate data is converted into CMYK data by using output profiles. The output profiles are profiles for the output of target colors with an ink-jet printing machine and the like, that is, profiles color-matched so that the target colors are outputted from the printing machine.

The color conversion processing part 102, on the other hand, performs the color conversion process in a manner to be described below. First, the color conversion processing part 102 converts the input image data into Lab data by using a "first table T1" serving as the input profiles to acquire intermediate data. Subsequently, the color conversion processing part 102 does not use a "second table T2" serving as output profiles but uses a "correction table TC" produced based on the second table T2 to convert the acquired intermediate data into CMYK data. The tables T1, T2 and TC will be described in more detail later. The use of the CMYK data subjected to the color conversion by using the "correction table TC" allows the reduction in the amount of ink for use in the output image, as compared with CMYK data subjected to the color conversion by using the second table T2.

The output image data acquisition part 103 acquires the CMYK data provided by the conversion process in the color conversion processing part 102 as the output image data. The output image data acquisition part 103 sends the acquired output image data to the printer 2. As mentioned above, the printer 2 forms on the recording paper an image based on the received output image data.

The correction profile acquisition part 104 acquires "correction profiles PC" based on "standard profiles P" stored in the storage part 12. The correction profile acquisition part 104 will be described in more detail later.

<3. Profiles>

The standard profiles P and the correction profiles PC are stored in the storage part 12 of the color conversion device 1 as the profiles for use in the color conversion process.

<3-1. Standard Profiles>

The standard profiles P are profiles for color management (color matching) produced for the printer 2 connected to the color conversion device 1 (e.g., ICC profiles in conformity with ICC (International Color Consortium) standards). The standard profiles P include two conversion tables: the "first table T1" serving as the input profiles; and the "second table T2" serving as the output profiles.

The first table T1 is a conversion table for the conversion from the input image data into image data (referred to hereinafter as "Lab data") represented by coordinate values in a device-independent color space (i.e., represented in a L*a*b* color system). The device-independent color space includes, for example, a uniform color space such as a Lab color space and a YCbCr color space, and is assumed to be a Lab color space in this case. In other words, the first table T1 is a comparative table or look-up table (LUT) indicating a relationship between coordinate values (input values) in the CMYK color space and coordinate values (output values) in the Lab color space. The Lab data is represented by a parameter "L" indicating lightness, a parameter "a" specified by a red/green axis, and a parameter "b" specified by a yellow/blue axis. The "a" and "b" components represent hue and chromaticness.

The second table T2 is a conversion table for the conversion from the image data (Lab data) represented by coordinate values in a device-independent color space (in this case, a Lab color space) into CMYK data color-matched to the printer 2 serving as the output device. In other words, the second table T2 is a comparative table or look-up table (LUT) indicating a relationship between coordinate values (input values) in the Lab color space and coordinate values (output values) in the CMYK color space. An output value (a coordinate value in the CMYK color space) stored in the second table T2 is referred to hereinafter as a "standard coordinate value."

<3-2. Correction Profiles>

The correction profiles PC are profiles produced based on the standard profiles P. The correction profiles PC include the correction table TC.

Like the second table T2, the correction table TC is a conversion table for the conversion from the image data represented by coordinate values in a device-independent color space into CMYK data color-matched to the printer 2 serving as the output device. Specifically, the correction table TC is a comparative table or look-up table (LUT) indicating a relationship between coordinate values (input values) in the Lab color space and coordinate values (output values) in the CMYK color space. An output value (a coordinate value in the CMYK color space) stored in the correction table TC is referred to hereinafter as a "correction coordinate value."

The correction coordinate values are calculated based on the corresponding standard coordinate values, and stored in the correction table TC, which will be described in detail later. It should be noted that "a correction coordinate value and a standard coordinate value corresponding to each other" refer to coordinate values associated with the same input value in the second table T2 and the correction table TC, respectively.

The correction coordinate value is increased in black (K) component value and decreased in cyan (C), magenta (M) and yellow (Y) component values, as compared with the yet-to-be-corrected coordinate value (i.e., the corresponding standard coordinate value). The value of color difference between the correction coordinate value and the standard coordinate value (i.e., the coordinate value color-matched to the printer 2) is within a predetermined allowable range. Thus, the CMYK data obtained by performing the conversion process using the first table T1 and the correction table TC in the color conversion processing part 102 requires a smaller amount of ink for printing than the CMYK data obtained by performing the conversion process using the second table T2, while being color-matched to the printer 2 within the predetermined allowable range.

<4. Correction Profile Acquisition Part>

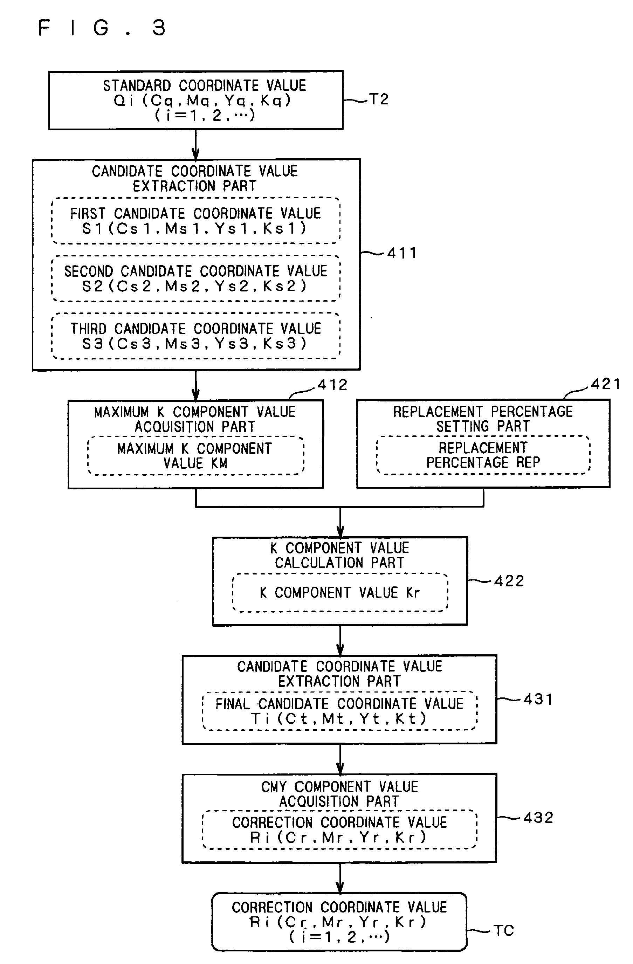

Next, the correction profile acquisition part 104 will be described in detail with reference to Fig. 3 in addition to Fig. 2. Fig. 3 is a diagram for illustrating a procedure for the color conversion process. As mentioned above, the correction profile acquisition part 104 acquires the correction profiles PC based on the standard profiles P. More specifically, the correction profile acquisition part 104 corrects the standard coordinate values stored in the second table T2 of the standard profiles P to new coordinate values, respectively, to store the corrected values as the correction coordinate values in the correction table TC of the correction profiles PC. With reference to Fig. 3, the standard coordinate value and the correction coordinate value corresponding to each other are denoted hereinafter as a "standard coordinate value $Qi(Cq, Mq, Yq, Kq)$" and a "correction coordinate value $Ri(Cr, Mr, Yr, Kr)$," and the calculation of the correction coordinate value $Ri$ based on the standard coordinate value $Qi$ will be specifically described.

The correction profile acquisition part 104 includes a maximum K component value specification part 41, a K component value determination part 42, and a correction coordinate value acquisition part 43.

<4-1. Maximum K Component Value Specification Part>

The maximum K component value specification part 41 specifies the maximum possible value (referred to hereinafter as a "maximum K component value KM") taken as the K component value $Kr$ of the correction coordinate value $Ri$ corresponding to the standard coordinate value $Qi$. The maximum K component value specification part 41 includes a candidate coordinate value extraction part 411, and a maximum K component value acquisition part 412.

The candidate coordinate value extraction part 411 includes a first extraction part 411a, a second extraction part 411b, and a third extraction part 411c.

The first extraction part 411a extracts coordinate values each having a K component value greater than the K component value $Kq$ of the standard coordinate value $Qi$, a C component value less than the C component value $Cq$ of the standard coordinate value $Qi$, an M component value less than the M component value $Mq$ of the standard coordinate value $Qi$, and a Y component value less than the Y component value $Yq$ of the standard coordinate value $Qi$ to acquire first candidate coordinate values $S1(Cs1, Ms1, Ys1, Ks1)$. That is, coordinate values which satisfy "$Ks1 > Kq$," "$Cs1 < Cq$," "$Ms1 < Mq$," and "$Ys1 < Yq$" are extracted as the first candidate coordinate values $S1$.

The extraction of the first candidate coordinate values $S1$ means the extraction of coordinate values which are increased in K component and decreased in C, M and Y components, as compared with the standard coordinate value $Qi$, that is, coordinate values which can accomplish the reduction in the amount of ink.

The second extraction part 411b extracts coordinate values such that the color difference $\Delta E$ from the standard coordinate value $Qi$ is less than a predetermined value to acquire second candidate coordinate values $S2(Cs2, Ms2, Ys2, Ks2)$. The color difference $\Delta E$ between CMYK data can be obtained by converting each of the CMYK data to be compared with each other into Lab data by using the first table T1 and then calculating a Euclidean distance in the Lab color space. In other words, the color difference $\Delta E$ between the standard coordinate value $Qi$ and each second candidate coordinate value $S2$ is specified by the Euclidean distance between a coordinate value $Qi'(Lq, aq, bq)$ obtained by the conversion from the standard coordinate value $Qi(Cq, Mq, Yq, Kq)$ into the Lab data and a coordinate value $S2'(Ls2, as2, bs2)$ obtained by the conversion from each second candidate coordinate value $S2(Cs2, Ms2, Ys2, Ks2)$ into the Lab data. This is expressed as: $\Delta E = ((Lq - Ls2)^2 + (aq - as2)^2 + (bq - bs2)^2)^{\frac{1}{2}}$.

The extraction of the second candidate coordinate values S2 means the extraction of coordinate values such that the color difference $\Delta E$ from the standard coordinate value Qi is less than a predetermined value, that is, coordinate values which are judged to be held identical with those of the color defined by the standard coordinate value within a predetermined allowable range. Ideally, the color difference $\Delta E$ is equal to zero. However, a coordinate value which satisfies $\Delta E = 0$ is not always found because of errors included in a conversion system. The present inventor has recognized that color reproducibility in a typical image formation process is sufficiently ensured by setting the predetermined value at "3" (i.e., by extracting coordinate values satisfying $\Delta E < 3$ as the second candidate coordinate values S2) when the "L" component is determined in the range of 0 to 100 and the "a" and "b" components are determined in the range of -128 to 127. The predetermined value need not necessarily be set at "3" but may be set as appropriate depending on the purpose of printing.

The third extraction part 411c extracts coordinate values such that the minimum one of the C, M and Y component values thereof is less than a predetermined value to acquire third candidate coordinate values S3(Cs3, Ms3, Ys3, Ks3).

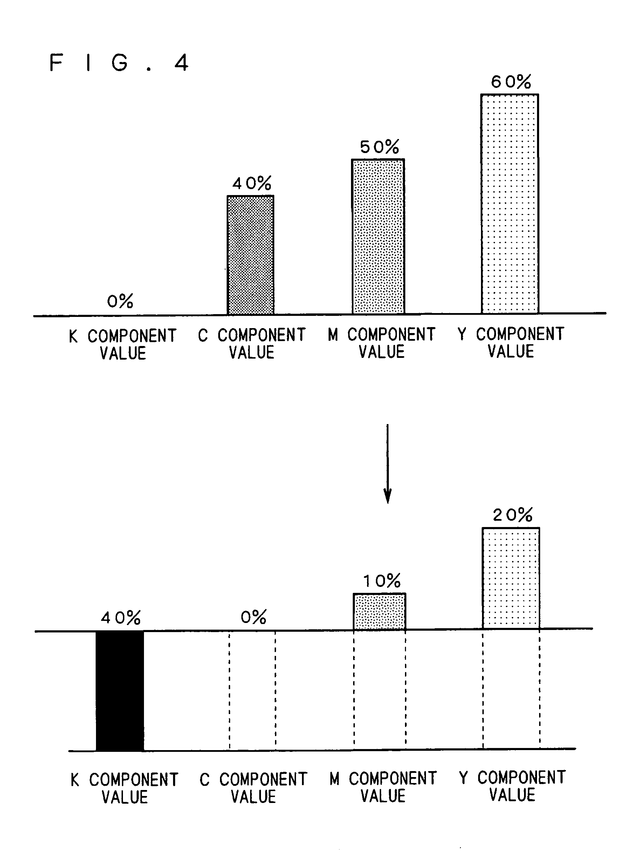

The extraction of the third candidate coordinate values S3 means the extraction of coordinate values such that any one of the C, M and Y component values thereof is sufficiently small, that is, coordinate values such that the K component takes the maximum value (or at least such that the K component value is great enough to be regarded as the maximum). This principle will be described in more detail. The color represented by the C, M, Y and K components is presented by applying cyan, magenta, yellow and black inks (referred to hereinafter as C, M, Y and K inks, respectively) on a medium one upon another. In this process, the K ink may be used in place of an overlap between the C, M and Y inks. As shown in Fig. 4, an overlap between the C, M and Y components may be replaced with the K component. A situation in which the maximum overlap is replaced with the K component is such a situation that one of the C, M and Y components reaches zero, as shown in Fig. 4. Thus, a coordinate value such that any one of the C, M and Y component values thereof is sufficiently small is a coordinate value such that the K component takes the maximum value. However, a coordinate value such that any one of the C, M and Y components reaches zero is not always found because of errors included in a conversion system. The present inventor has recognized that a value which may be regarded as the maximum K component value without any problem is acquired by setting the predetermined value at "3%" (i.e., by extracting coordinate values such that any one of the C, M and Y components is less than 3%). The predetermined value need not necessarily be set at "3%" but may be set as appropriate depending on the purpose of printing.

The maximum K component value acquisition part 412 acquires the maximum K component value KM based on the candidate coordinate values extracted by the candidate coordinate value extraction part 411. More specifically, the maximum K component value acquisition part 412 acquires, as the maximum K component value KM, the K component value of the candidate coordinate values which are extracted as the first candidate coordinate values S1 by the first extraction part 411a, which are extracted as the second candidate coordinate values S2 by the second extraction part 411b and which are extracted as the third candidate coordinate values S3 by the third extraction part 411c.

As discussed above, the maximum K component value specification part 41 specifies the maximum K component value KM which is the maximum possible value taken as the K component value Kr of the correction coordinate value Ri. In other words, the maximum K component value specification part 41 specifies the specific range of the possible value taken by the K component value Kr of the correction coordinate value Ri (or the range between the K component value Kq of the standard coordinate value Qi and the maximum K component value KM).

In the image formation using inks, the greater the amount of K ink used in the image formation, the smaller the amount of use of the C, M and Y inks. This reduces the total amount of inks required for the output of prints. Additionally, the use of a greater amount of K ink which is relatively inexpensive as compared with the C, M and Y inks reduces running costs. On the other hand, it is generally known that the use of greater amounts of C, M and Y inks for image formation provides good image quality free of graininess.

It is desirable to maximize the K component value Kr when a higher priority is given to the reduction in the amount of ink than to image quality, whereas it is not desirable to make the K component value Kr too high when a higher priority is given to image quality than to the reduction in the amount of ink. For this reason, the first preferred embodiment has a structure (the K component value determination part 42) which allows a user to determine to what extent to increase the K component value Kr.

<4-2. K Component Value Determination Part>

The K component value determination part 42 determines the K component value Kr of the correction coordinate value Ri. More specifically, the K component value determination part 42 acquires a predetermined value ranging between the K component value Kq of the standard coordinate value Qi and the maximum K component value KM specified by the maximum K component value specification part 41 as the K component value Kr. The K component value determination part 42 includes a replacement percentage setting part 421, and a K component value calculation part 422.

The replacement percentage setting part 421 sets a "replacement percentage REP" in response to an input manipulation from a user. The "replacement percentage REP" is a value defining to what extent to increase the K component value Kr of the correction coordinate value Ri from the K component value Kq of the standard coordinate value Qi, and takes a value in the range of 0 to 100%.

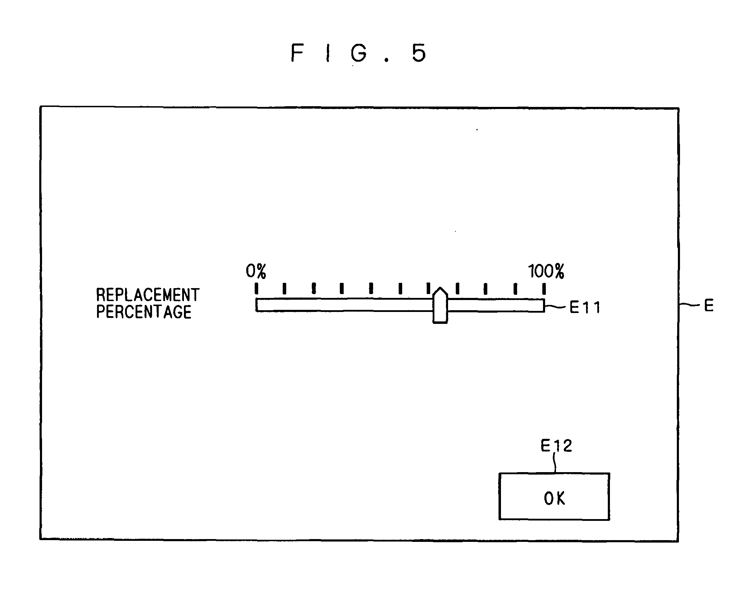

The process in which the replacement percentage setting part 421 determines the replacement percentage REP will be described in more detail with reference to Fig. 5. Fig. 5 is a view showing an example of the layout of a replacement percentage acceptance screen E. The replacement percentage setting part 421 causes the replacement percentage acceptance screen E to appear on the display part 14. A slider E11 with a scale of 0 to 100% and an OK button E12 appear on the replacement percentage acceptance screen E.

A user moves the slider E11 to adjust the replacement percentage REP. When the user adjusts the slider E11 to a given value and then clicks or touches the OK button E12, the replacement percentage setting part 421 accepts the inputted value as the replacement percentage REP.

Referring again to Figs. 2 and 3, the K component value calculation part 422 calculates the K component value Kr of the correction coordinate value Ri, based on the maximum K component value KM acquired by the maximum K component value specification part 41 and the replacement percentage REP set by the replacement percentage setting part 421. More specifically, the K component value calculation part 422 adds a value (or an increment) obtained by multiplying a difference (or a maximum increment) between the maximum K component value KM and the K component value Kq of the standard coordinate value Qi by the replacement percentage REP to the K component value Kq of the standard coordinate value Qi to acquire the K component value Kr of the correction coordinate value Ri. That is, the K component value Kr is obtained by

$$Kr = Kq + (KM - Kq) \times REP/100 \qquad\qquad (1)$$

As mentioned above, the K component value determination part 42 determines the K component value Kr of the correction coordinate value Ri corresponding to the standard coordinate value Qi.

<4-3. Correction Coordinate Value Acquisition Part>

The correction coordinate value acquisition part 43 determines the C component value Cr, the M component value Mr and the Y component value Yr of the correction coordinate value Ri corresponding to the standard coordinate value Qi to acquire the correction coordinate value Ri. The correction coordinate value acquisition part 43 includes a candidate coordinate value extraction part 431, and a CMY component value acquisition part 432.

The candidate coordinate value extraction part 431 extracts coordinate values each having the K component value Kr determined by the K component value determination part 42, a C component value less than the C component value Cq of the standard coordinate value Qi, an M component value less than the M component value Mq of the standard coordinate value Qi and a Y component value less than the Y component value Yq of the standard coordinate value Qi to acquire final candidate coordinate values Ti(Ct, Mt, Yt, Kt). In other words, coordinate values which satisfy "Kt = Kr," "Ct < Cq," "Mt < Mq" and "Yt < Yq" are extracted as the final candidate coordinate values Ti.

The CMY component value acquisition part 432 specifies a coordinate value such that the color difference ΔE from the standard coordinate value Qi is the minimum of all final candidate coordinate values Ti extracted by the candidate coordinate value extraction part 431 to acquire this coordinate value as the correction coordinate value Ri(Cr, Mr, Yr, Kr). As mentioned above, the color difference ΔE between CMYK data is acquired by calculating the Euclidean distance in the Lab color space. It is herein desirable to specify the coordinate value which provides the minimum color difference ΔE as the correction coordinate value Ri. However, when a coordinate value which provides the color difference ΔE less than a predetermined value, this coordinate value may be regarded as the coordinate value which provides the minimum color difference ΔE and defined as the correction coordinate value Ri.

As described above, the correction coordinate value acquisition part 43 determines the correction coordinate value Ri corresponding to the standard coordinate value Qi. The correction profile acquisition part 104 stores the determined correction coordinate value Ri(Cr, Mr, Yr, Kr) in the correction table TC.

<5. Procedure>

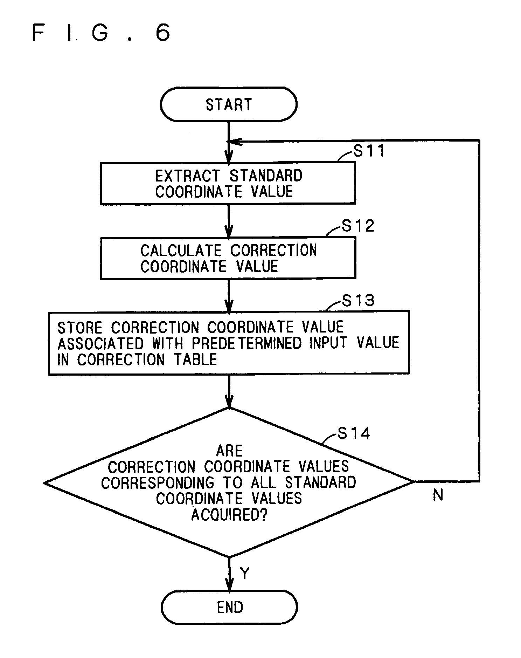

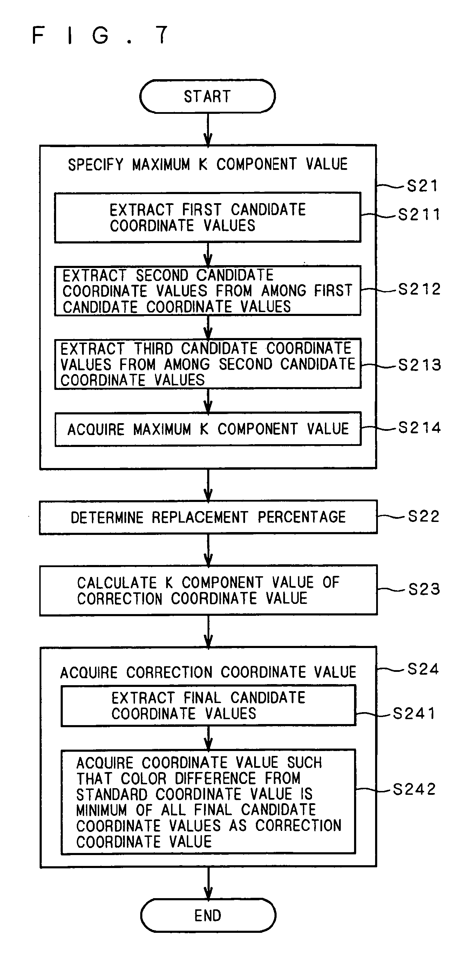

Next, a procedure for the process of acquiring the correction profiles PC which is executed by the correction profile acquisition part 104 will be described with reference to Figs. 6 and 7.

<5-1. Entire Procedure>

Fig. 6 is a diagram showing the entire procedure for the process of acquiring the correction profiles PC. Referring to Fig. 6, the correction profile acquisition part 104 initially extracts one of the plurality of standard coordinate values stored in the second table T2 of the standard profiles P (in Step S11).

Subsequently, the correction profile acquisition part 104 calculates the correction coordinate value corresponding to the standard coordinate value extracted in Step S11 (in Step S12). This process will be described in detail later.

Subsequently, the correction profile acquisition part 104 associates the correction coordinate value acquired in Step S12 with a predetermined coordinate value (or input value) in a Lab color space to store the correction coordinate value associated with the predetermined input value in the correction table TC (in Step S13). The predetermined input value is equal to the input value associated in the second table T2 with the standard coordinate value extracted in Step S11.

The correction profile acquisition part 104 completes the process when the processes in Steps S11 to S13 are executed on all of the plurality of standard coordinate values stored in the second table T2 (i.e., when the correction coordinate values corresponding to all of the plurality of standard coordinate values stored in the second table T2 are stored in the correction table TC) (Yes in Step S14).

<5-2. Procedure for Process of Calculating Correction Coordinate Value>

Fig. 7 is a diagram showing a procedure for the process of calculating the correction coordinate value (the process in Step S12 of Fig. 6). Referring to Fig. 7, the maximum K component value specification part 41 initially specifies the maximum possible value (the maximum K component value KM) taken as the K component value Kr of the correction coordinate value Ri corresponding to the standard coordinate value Qi extracted in Step S11 (of Fig. 6) (in Step S21).

More specifically, the process in Step S21 is performed in a manner to be described below. First, the first extraction part 411 a extracts coordinate values each having a K component value greater than the K component value Kq of the standard coordinate value Qi, a C component value less than the C component value Cq of the standard coordinate value Qi, an M component value less than the M component value Mq of the standard coordinate value Qi, and a Y component value less than the Y component value Yq of the standard coordinate value Qi to acquire the first candidate coordinate values S1 (in Step S211).

Subsequently, the second extraction part 411b extracts coordinate values such that the color difference ΔE from the standard coordinate value Qi is less than a predetermined value from among all of the first coordinate values S1 extracted in Step S211 to acquire the second candidate coordinate values S2 (in Step S212).

Subsequently, the third extraction part 411c extracts coordinate values such that the minimum one of the C, M and Y component values thereof is less than a predetermined value from among all of the second coordinate values S2 extracted in Step S212 to acquire the third candidate coordinate values S3 (in Step S213).

Subsequently, the maximum K component value acquisition part 412 acquires the K component value of the third candidate coordinate values S3 acquired in Step S213 as the maximum K component value KM (in Step S214). Thus, the process in Step S21 is completed.

Next, the replacement percentage setting part 421 sets the replacement percentage REP in response to an input manipulation from a user (in Step S22). More specifically, the replacement percentage acceptance screen E (see Fig. 5) which accepts the input of the replacement percentage REP from the user is displayed on the display part 14. When the user performs a predetermined input manipulation on the replacement percentage acceptance screen E, the replacement percentage setting part 421 accepts the inputted value as the replacement percentage REP.

Subsequently, the K component value calculation part 422 calculates the K component value Kr of the correction coordinate value Ri (see Equation (1)) based on the maximum K component value KM acquired in step S21 by the maximum K component value specification part 41 and the replacement percentage REP set in Step S22 by the replacement percentage setting part 421 (in Step S23).

Subsequently, the correction coordinate value acquisition part 43 determines the C component value Cr, the M component value Mr and the Y component value Yr of the correction coordinate value Ri corresponding to the standard coordinate value Qi to acquire the correction coordinate value Ri (in Step S24).

More specifically, the process in Step S24 is performed in a manner to be described below. First, the candidate coordinate value extraction part 431 extracts coordinate values each having the K component value Kr determined by the K component value determination part 42, a C component value less than the C component value Cq of the standard coordinate value Qi, an M component value less than the M component value Mq of the standard coordinate value Qi, and a Y component value less than the Y component value Yq of the standard coordinate value Qi to acquire the final candidate coordinate values Ti (in Step S241).

Subsequently, the CMY component value acquisition part 432 specifies a coordinate value such that the color difference ΔE from the standard coordinate value Qi is the minimum of all final candidate coordinate values Ti extracted in Step S241 to acquire this coordinate value as the correction coordinate value Ri(Cr, Mr, Yr, Kr) (in Step S242). Thus, the process in Step S24 is completed, and the process of calculating the correction coordinate value is completed.

<6. Effect>

According to the first preferred embodiment, the correction profiles PC are used for the conversion of the input image data. The correction coordinate value stored in the correction profiles PC is increased in K component value and decreased in C, M and Y component values, as compared with the corresponding standard coordinate value. The correction coordinate value is a value such that the color difference from the standard coordinate value stored in the standard profiles color-matched to the output device is less than a predetermined value. Thus, the first preferred embodiment reduces the amount of ink for use in the printing process in the printer 2 while ensuring the color matching to the output device. In particular, the first preferred embodiment effectively accomplish the reduction in running costs because of the capability of reducing the amount of use of the C, M and Y inks which are generally expensive relative to the K ink. Additionally, the first preferred embodiment makes heavy use of the K ink to represent a portion which has been represented by the three layers of C, M and Y inks, thereby reducing the volume of ink on the medium. This accomplishes stable image formation. Also, the correction coordinate value is a coordinate value such that the color difference from the corresponding standard coordinate value is less than the predetermined value, to thereby ensure the color matching to the printer 2 serving as the output device.

The above-mentioned first preferred embodiment, which calculates the K component value Kr based on the replacement percentage REP, can adjust the value of the replacement percentage REP to thereby adjust to what extent to increase the K component value Kr from the K component value Kq of the standard coordinate value Qi. The more the K component is increased, the smaller the amount of ink required for printing is. In contrast to this, the suppression of the increment of the K component provides good image quality because of the heavy use of the C, M and Y inks. Thus, the user adjusts the value of the replacement percentage REP to control whether to give a higher priority to the reduction in the amount of ink or to the improvement in image quality.

[Second Preferred Embodiment]

The color conversion device 1 according to the first preferred embodiment is structured to include a functional part (the replacement percentage setting part 421) for setting a single value as the replacement percentage REP. This functional part may be adapted to set the replacement percentage REP at different values depending on hues.

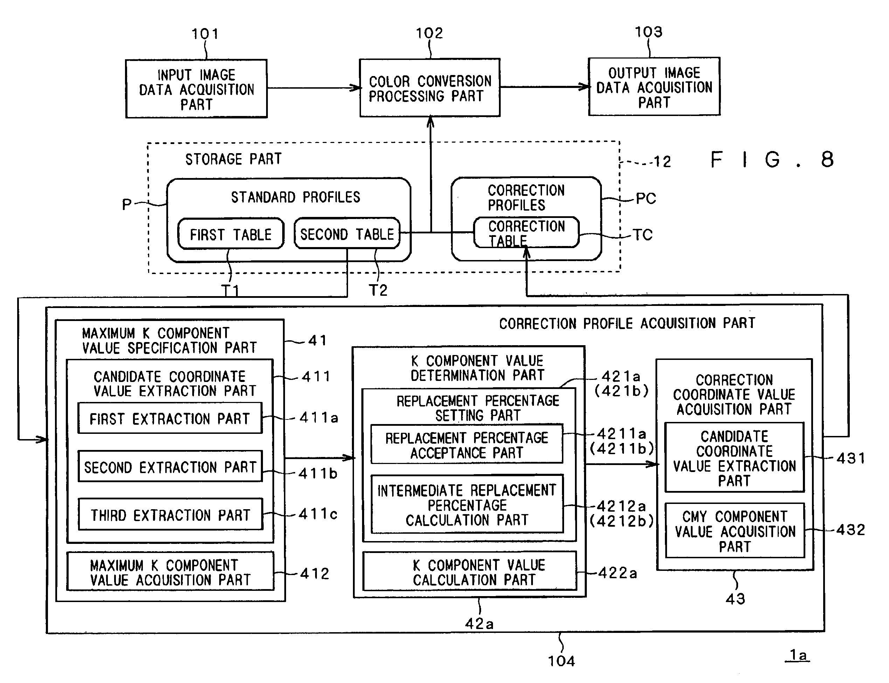

A color conversion device 1a according to a second preferred embodiment of the present invention will be described with reference to Fig. 8. Fig. 8 is a block diagram showing a functional construction implemented in the color conversion device 1a and related to the color conversion process. Only differences from the first preferred embodiment will be described hereinafter, and commonalities will not be described. Like reference numerals and characters are used to designate components identical with those of the first preferred embodiment. The color conversion device 1a according to the second preferred embodiment includes a K component value determination part 42a. The K component value determination part 42a includes a replacement percentage setting part 421a, which will be described below.

<1. Replacement Percentage Setting Part>

The replacement percentage setting part 421a includes a replacement percentage acceptance part 4211a, and an intermediate replacement percentage calculation part 4212a.

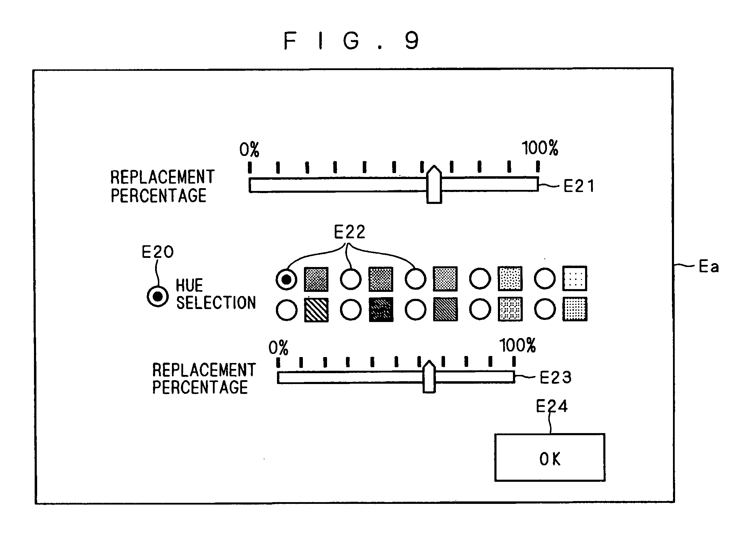

The replacement percentage acceptance part 4211a sets the replacement percentage REP in response to an input manipulation from a user. The process in which the replacement percentage acceptance part 4211a determines the replacement percentage REP will be described in more detail with reference to Fig. 9. Fig. 9 is a view showing an example of the layout of a replacement percentage acceptance screen Ea. The replacement percentage acceptance part 4211a causes the replacement percentage acceptance screen Ea to appear on the display part 14. A slider E21 with a scale of 0 to 100%, a hue specification radio button E20 for announcing that the replacement percentage REP is specified for each hue, a plurality of hue selection buttons E22 related to respective hues, a slider E23 with a scale of 0 to 100% like the slider E21, and an OK button E24 appear on the replacement percentage acceptance screen Ea.

A user moves the slider E21 to adjust the replacement percentage REP (a basic replacement percentage) for the entire color region. When the user adjusts the slider E21 to a given value and then clicks or touches the OK button E24, the replacement percentage acceptance part 4211a accepts the inputted value as the basic replacement percentage REP.

The user is allowed to not only set the replacement percentage REP for the entire color region but also set the replacement percentage REP at different values for respective hue regions. That is, the user is allowed to specify a particular value of the replacement percentage REP for a particular hue. More specifically, the user selects the hue specification radio button E20 and one of the hue selection buttons E22 corresponding to a hue for which the user desires to specify the replacement percentage REP to cause a black dot to appear in each button, and moves the slider E23, thereby adjusting the replacement percentage REP (a particular replacement percentage) for the selected hue. When the user selects one of the hue selection buttons E22, adjusts the slider E23 to a given value and then clicks or touches the OK button E24, the replacement percentage acceptance part 4211a accepts the inputted value as the particular replacement percentage for the selected hue. The user is allowed to set any replacement percentage REP for at least one hue by performing the above-mentioned manipulation for all of the hues for which the user desires to specify the replacement percentage REP.

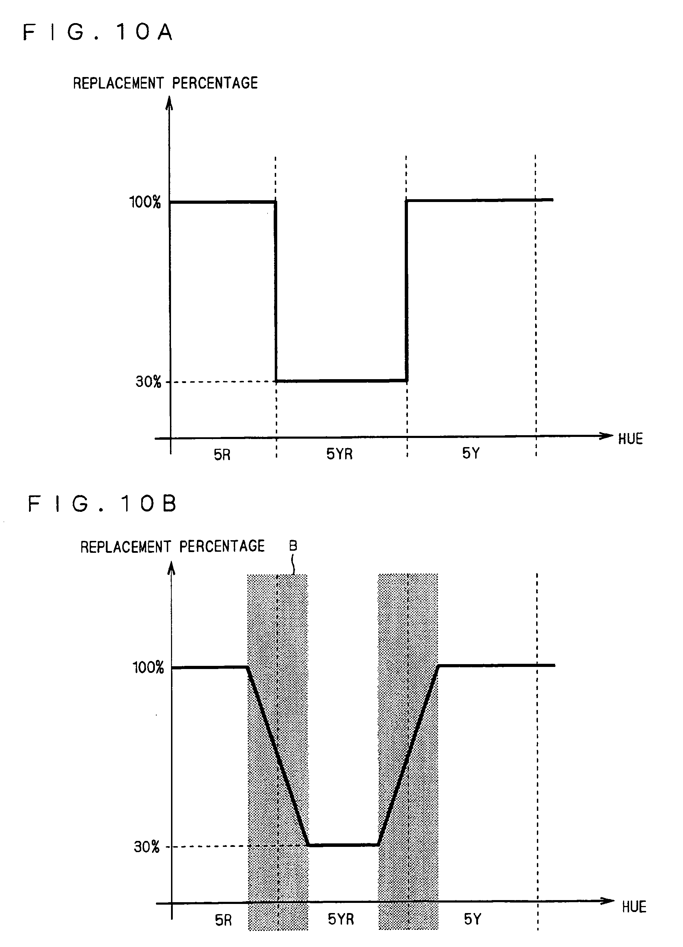

As an example, when the user inputs the replacement percentage of "100%" for the entire color region and the replacement percentage of "30%" for a hue region 5YR, the replacement percentage acceptance part 4211a sets the particular replacement percentage REP for the hue region 5YR at "30%" and sets the replacement percentage REP for other hue regions at "100%," as shown in Fig. 10A.

In a condition shown in Fig. 10A, the replacement percentage REP changes abruptly in a particular region (in the instance shown in Fig. 10A, a boundary region between the hue region 5YR and a hue region 5Y adjacent thereto, and a boundary region between the hue region 5YR and a hue region 5R adjacent thereto) regardless of the fact that hue changes continuously. The use of such a replacement percentage REP for the calculation of the K component value Kr of the correction coordinate value Ri causes an abrupt change in the K component for a particular hue. In other words, the amount of use of the K ink changes abruptly. This presents the problem of the deterioration of image quality. To solve the problem, the second preferred embodiment has a structure (the intermediate replacement percentage calculation part 4212a) which prevents the abrupt change in the replacement percentage REP near the boundary between hue regions when the replacement percentage REP is set at different values for adjacent hue regions.

The intermediate replacement percentage calculation part 4212a calculates the replacement percentage REP for an intermediate region, based on the replacement percentage REP for each hue accepted by the replacement percentage acceptance part 4211a. More specifically, when the replacement percentage REP is set at different values for adjacent hue regions, the intermediate replacement percentage calculation part 4212a sets the replacement percentage REP for the boundary region between the adjacent hue regions at a value calculated by linear interpolation between the values of the replacement percentage REP set for the adjacent hue regions.

As an example, when the replacement percentage REP is set at different values of "30%" and "100%" respectively for the hue regions 5YR and 5R adjacent to each other, as shown in Fig. 10A, the replacement percentage REP for a boundary region B between the two hue regions 5YR and 5R is determined by the linear interpolation between the replacement percentage of "30%" set for the hue region 5YR and the replacement percentage of "100%" set for the hue region 5R. This provides a gradual change in the replacement percentage REP, as shown in Fig. 10B, to prevent the deterioration of image quality.

<2. Procedure>

A procedure for the process of acquiring the correction profiles PC according to the second preferred embodiment is substantially similar to that described in the first preferred embodiment. For the calculation of the correction coordinate value according to the second preferred embodiment, however, the replacement percentage acceptance part 4211a performs the process (the process corresponding to Step S22 of Fig. 7) of setting the replacement percentage REP in response to the input manipulation from the user, and the intermediate replacement percentage calculation part 4212a then performs the process of determining the replacement percentage REP for the boundary region by linear interpolation when the replacement percentage REP is set at different values for adjacent hue regions. After the calculation of the replacement percentage REP for the boundary region, a K component value calculation part 422a uses the calculated value of the replacement percentage REP to calculate the K component value Kr of the correction coordinate value Ri (the process corresponding to Step S23 of Fig. 7).

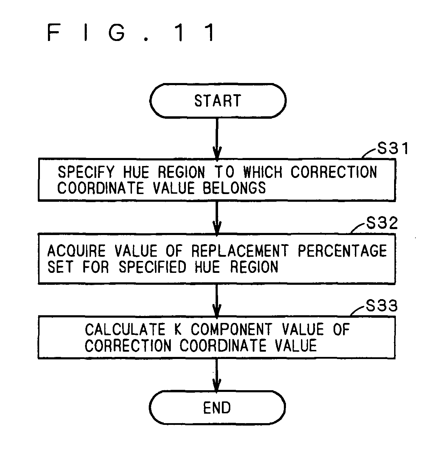

A procedure for the process corresponding to Step S23 of Fig. 7 will be described with reference to Fig. 11. Fig. 11 is a diagram showing the procedure for the process of calculating the K component value Kr.

First, a hue region to which the standard coordinate value Qi extracted in Step S11 of Fig. 6 belongs is specified (in Step S31). The hue for the CMYK data is specified by converting the CMYK data into Lab data, for example, by using the first table T1 and then calculating the angle that the coordinate value in the Lab color space makes with the a-axis (or b-axis).

Subsequently, the value of the replacement percentage REP set for the hue region specified in Step S31 (i.e., the hue region to which the standard coordinate value Qi belongs) is acquired from among the values of the replacement percentage REP set by the replacement percentage setting part 421a (in Step S32).

Next, the maximum K component value specification part 41 calculates the K component value Kr of the correction coordinate value Ri (see Equation (1) indicated above), based on the previously acquired maximum K component value KM (in Step S21 of Fig. 7) and the replacement percentage REP acquired in Step S32 (in Step S33).

<3. Effect>

According to the second preferred embodiment described above, the user is allowed to specify a hue to set the replacement percentage REP. In other words, the user is allowed to set the replacement percentage REP (or the particular replacement percentage) at different values depending on hues. This permits a selection for each hue as to whether to give a higher priority to the reduction in the amount of ink or to the improvement in image quality. For example, the setting of the replacement percentage REP for a particular hue region (e.g., a hue region, such as a skin-tone region, in which the deterioration of image quality is especially disliked) at a value lower than the basic replacement percentage prevents the deterioration of image quality for the particular hue region while reducing the entire amount of ink.

Additionally, when the replacement percentage REP is set at different values for adjacent hue regions, the second preferred embodiment is configured to calculate the replacement percentage REP for the boundary region therebetween by the linear interpolation between the values of the replacement percentage set for the respective hue regions. This makes gradual the abrupt change in K component replacement percentage for the boundary region to prevent the deterioration of image quality resulting from the abrupt change in K component replacement percentage.

[Third Preferred Embodiment]

The replacement percentage setting part 421a according to the second preferred embodiment is configured to set the replacement percentage REP at different values depending on hues. This functional part may be configured to set the replacement percentage REP at different values depending on chromaticness.

A replacement percentage setting part 421b (see Fig. 8) according to a third preferred embodiment of the present invention will be described. The construction other than the replacement percentage setting part 421b included in the color conversion device according to the third preferred embodiment is similar to that in the color conversion device 1a according to the second preferred embodiment.

<1. Replacement Percentage Setting Part>

The replacement percentage setting part 421b includes a replacement percentage acceptance part 4211b, and an intermediate replacement percentage calculation part 4212b (see Fig. 8).

The replacement percentage acceptance part 4211b sets the replacement percentage REP in response to an input manipulation from a user. The function of the replacement percentage acceptance part 4211b according to the third preferred embodiment is substantially similar to that of the replacement percentage acceptance part 4211a according to the second preferred embodiment. The difference is that the replacement percentage acceptance part 4211b accepts not only the replacement percentage REP at different values for respective hue regions but also the replacement percentage REP at different values for respective chromatic regions.

The replacement percentage acceptance part 4211b may be configured to determine the replacement percentage REP for all chromatic regions in response to an input manipulation from a user. Alternatively, the replacement percentage acceptance part 4211b may be configured to determine the replacement percentage REP for a region having chromaticness greater than a predetermined value (i.e., a region which is not near a gray axis (or achromatic axis) in the Lab color space) in response to an input manipulation from a user, and to always set the replacement percentage REP at "100%" for a region having chromaticness less than the predetermined value (i.e., an achromatic region near the gray axis (or achromatic axis) in the Lab color space). An example of the achromatic region is a region having a Euclidean distance in the range of 0 to 10 from the L-axis in an a-b plane of the Lab space. It should be noted that the Euclidean distance of a coordinate point from the L axis in the a-b plane of the Lab space takes a value representing the chromaticness at the coordinate point.

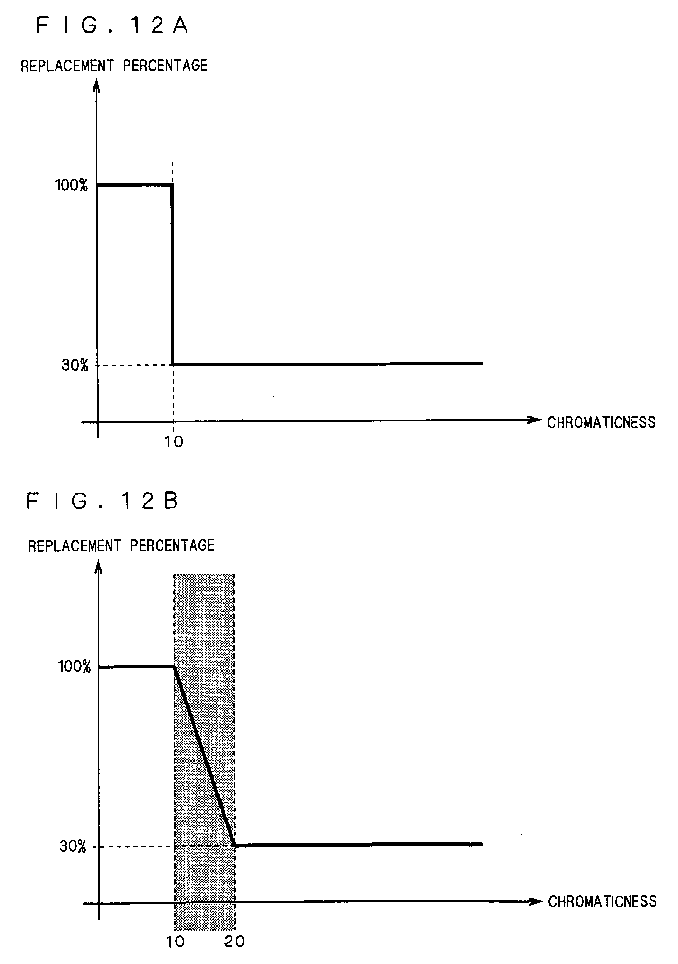

In the latter configuration, when a user inputs the replacement percentage of, for example, "30%" for the entire color region, the replacement percentage acceptance part 4211b sets the replacement percentage REP at "100%" for an achromatic region having chromaticness less than the predetermined value ("10" in the instance shown in Fig. 12A), and sets the replacement percentage REP at "30%" for other chromatic regions.

In a condition shown in Fig. 12A, the replacement percentage REP changes abruptly in a particular region (a boundary region between the achromatic region and the other regions) regardless of the fact that chromaticness changes continuously. The use of such a replacement percentage REP for the calculation of the K component value Kr of the correction coordinate value Ri causes an abrupt change in the K component for particular chromaticness. This presents the problem of the deterioration of image quality as discussed above. To solve the problem, it is desirable to provide a structure (the intermediate replacement percentage calculation part 4212b) which prevents the abrupt change in the replacement percentage REP near the boundary of the achromatic region, as in the second preferred embodiment.

As an example, the replacement percentage REP is set at "100%" for the data having a Euclidean distance in the range of 0 to 10 from the L-axis in the a-b plane of the Lab space, whereas a value specified for each chromaticness

**13**

is set as the replacement percentage REP for the data having a Euclidean distance of not less than 20 from the L-axis, as shown in Fig. 12B. The intermediate replacement percentage calculation part 4212b calculates the replacement percentage REP for the boundary region by linear interpolation, and a value obtained by this calculation is set as the replacement percentage REP for the data having a Euclidean distance in the range of 10 to 20 from the L-axis. This provides a gradual change in the replacement percentage REP to prevent the deterioration of image quality.

<2. Procedure>

A procedure for the process of acquiring the correction profiles PC according to the third preferred embodiment is substantially similar to that described in the second preferred embodiment. For the calculation of the correction coordinate value according to the third preferred embodiment, however, the replacement percentage acceptance part 4211b performs the process (the process corresponding to Step S22 of Fig. 7) of setting the replacement percentage REP in response to the input manipulation from the user, and the intermediate replacement percentage calculation part 4212b then performs the process of determining the replacement percentage REP for the boundary region by linear interpolation when the replacement percentage REP is set at different values for adjacent chromatic regions. After the calculation of the replacement percentage REP for the boundary region, the K component value calculation part 422a uses the calculated value of the replacement percentage REP to calculate the K component value Kr of the correction coordinate value Ri (the process corresponding to Step S23 of Fig. 7).

A procedure for the process corresponding to Step S23 of Fig. 7 is similar to that described in the second preferred embodiment. The process corresponding to Step S31 of Fig. 11 according to the third preferred embodiment is the process of specifying a chromatic region to which the standard coordinate value Qi extracted in Step S11 of Fig. 6 belongs. The chromaticness for the CMYK data is specified by converting the CMYK data into Lab data, for example, by using the first table T1 and then calculating the distance that the coordinate value and the achromatic axis are spaced apart from each other in the Lab color space. The process corresponding to Step S31 of Fig. 11 is the process of acquiring the value of the replacement percentage REP set for the previously specified chromatic region (i.e., the chromatic region to which the standard coordinate value Qi belongs) from among the values of the replacement percentage REP set by the replacement percentage setting part 421b.

<3. Effect>

The heavy use of the C, M and Y inks for the representation of a color region (a black region) having relatively low chromaticness and relatively low lightness increases the likelihood that the problem of color misregistration (e.g., a phenomenon such that the M ink or the like appears to be blurred outside the black region) arises depending on the conditions of a print head for ejecting ink particles. It is hence desirable to make heavy use of the K ink for the formation of the image of a black region from the viewpoint of preventing the deterioration of image quality. In the above-mentioned configuration, the value of the replacement percentage REP for the achromatic region is set at "100%," that is, the K component value Kr of in the correction coordinate value Ri for the achromatic region is set for the maximum K component value KM. This allows the heavy use of the K ink for the representation of the achromatic region to thereby prevent the deterioration of image quality.

[Other Preferred Embodiments]

Although the above-mentioned preferred embodiments employ an ink-jet printer as the printer 2, the printer 2 need not necessarily be an ink-jet printer. The above-mentioned effects are produced if an apparatus which uses ink to form an image on a medium is used as the printer 2. The printer 2 may be, for example, an offset printing apparatus which prepares camera-ready copy for printing, a laser printer which employs electrophotography for printing, and the like. In particular, when the printer 2 is an ink-jet printer, the reduction in the amount of ink produces not only the effect of reducing running costs but also the effects of eliminating set-off and eliminating insufficient drying which causes wrinkles. In particular, when the printer 2 is an image formation apparatus which employs offset printing or electrophotography, the above-mentioned preferred embodiments reduce the amount of ink applied onto a medium to accomplish a stable image formation process.

Although the color conversion device 1 (1a) according to the above-mentioned preferred embodiments is a device connected to the printer 2 through the communications circuit or network N (i.e., a device separate from the printer 2), the above-mentioned functional construction of the color conversion device 1 (1a) may be implemented in the printer 2. In other words, the above-mentioned color conversion device 1 (1a) may be integral with the printer 2. Alternatively, the functional construction of the color conversion device 1 (1a) may be held in a RIP (Raster Image Processor). In this case, the correction profiles PC may be used as profiles for a color conversion portion of the RIP.

The functional parts included in the color conversion device 1 (1a) are implemented by the computer executing the predetermined program 121 in the above-mentioned preferred embodiments, but may be implemented by purpose-built hardware.

While the invention has been described in detail, the foregoing description is in all aspects illustrative and not restrictive. It is understood that numerous other modifications and variations can be devised without departing from the scope of the invention.

**Claims**

1. A color conversion device (1) for converting input image data into data color-matched to a predetermined output device (2), comprising:

   a storage element (12) for storing therein standard profiles for converting a coordinate value in a color space into a standard coordinate value in a CMYK color space color-matched to said predetermined output device (2);
   a correction profile acquisition element (104) for acquiring correction profiles for converting a coordinate value in said color space into a correction coordinate value in a CMYK color space, based on said standard profiles, said correction profile acquisition element (104) including
   a candidate coordinate value extraction element (411) for extracting a candidate coordinate value, said candidate coordinate value being a coordinate value having a K component value greater than a K component value of said standard coordinate value, a C component value less than a C component value of said standard coordinate value, an M component value less than an M component value of said standard coordinate value and a Y component value less than a Y component value of said standard coordinate value, said candidate coordinate value being a coordinate value such that a color difference from said standard coordinate value is less than a first predetermined value, said candidate coordinate value being a coordinate value such that the minimum one of the C, M and Y component values thereof is less than a second predetermined value,
   a maximum K component value acquisition element (412) for acquiring the K component value of said candidate coordinate value as a maximum K component value,
   a correction K component value acquisition element (42) for acquiring a third predetermined value ranging between the K component value of said standard coordinate value and said maximum K component value as a correction K component value,
   a final candidate coordinate value extraction element (431) for extracting final candidate coordinate values, each of said final candidate coordinate values being a coordinate value having a K component value equal to said correction K component value, a C component value less than the C component value of said standard coordinate value, an M component value less than the M component value of said standard coordinate value and a Y component value less than the Y component value of said standard coordinate value, and
   a correction coordinate value acquisition element (43) for acquiring a coordinate value such that the color difference from said standard coordinate value is the minimum of all of said final candidate coordinate values as a correction coordinate value corresponding to said standard coordinate value; and
   a data conversion element (102) for converting said input image data by using said correction profiles.

2. The color conversion device (1) according to claim 1, wherein
   said correction K component value acquisition element (42) includes:

   a K component replacement percentage setting element (421) for setting a K component replacement percentage in response to an input manipulation from a user, said K component replacement percentage being a value defining to what extent to increase the K component value of said correction coordinate value from the K component value of said standard coordinate value; and
   a correction K component value calculation element (422) for calculating said correction K component value, based on said K component replacement percentage.

3. The color conversion device (1) according to claim 2, wherein
   said K component replacement percentage setting element (421) sets said K component replacement percentage at different values depending on hues.

4. The color conversion device (1) according to claim 3, wherein
   said K component replacement percentage setting element (421) Includes:

   a hue replacement percentage setting element (421a) for setting the value of said K component replacement percentage for each predetermined hue region; and

a replacement percentage interpolation element (4212a) for setting said K component replacement percentage for a boundary region between adjacent hue regions at a value calculated by linear interpolation between the values of said K component replacement percentage set for the respective adjacent hue regions when said K component replacement percentage Is set at different values for the adjacent hue regions.

5. The color conversion device (1) according to any one of claims 2 to 4, wherein

said K component replacement percentage setting element (421) sets said K component replacement percentage at different values depending on chromaticness, and sets said K component replacement percentage for a predetermined achromatic region at a maximum possible value taken as said K component replacement percentage.

6. A method of color conversion which converts input image data into data color-matched to a predetermined output device (2), said method comprising the steps of:

a) acquiring standard profiles (S11) for converting a coordinate value in a color space into a standard coordinate value in a CMYK color space color-matched to said predetermined output device (2);

b) acquiring correction profiles (S12) for converting a coordinate value in said color space into a correction coordinate value in a CMYK color space, based on said standard profiles,

said step b) including the steps of

b-1) extracting a candidate coordinate value (S211), said candidate coordinate value being a coordinate value having a K component value greater than a K component value of said standard coordinate value, a C component value less than a C component value of said standard coordinate value, an M component value less than an M component value of said standard coordinate value and a Y component value less than a Y component value of said standard coordinate value, said candidate coordinate value being a coordinate value such that a color difference from said standard coordinate value is less than a first predetermined value, said candidate coordinate value being a coordinate value such that the minimum one of the C, M and Y component values thereof Is less than a second predetermined value,

b-2) acquiring the K component value (S214) of said candidate coordinate value as a maximum K component value,

b-3) acquiring a third predetermined value ranging between the K component value of said standard coordinate value and said maximum K component value as a correction K component value,

b-4) extracting final candidate coordinate values (S241), each of said final candidate coordinate values being a coordinate value having a K component value equal to said correction K component value, a C component value less than the C component value of said standard coordinate value, an M component value less than the M component value of said standard coordinate value and a Y component value less than the Y component value of said standard coordinate value, and

b-5) acquiring a coordinate value (S242) such that the color difference from said standard coordinate value is the minimum of all of said final candidate coordinate values as a correction coordinate value corresponding to said standard coordinate value; and

c) converting said input image data by using said correction profiles.

7. A computer readable recording medium for storing a program which is stored in a computer including a CPU and a memory, said program being executed by said computer to execute the method according to claim 6.

8. An image formation system comprising:

a predetermined ink-jet printer (2); and

a color conversion device (1) according to claim 1 for converting input image data into data color-matched to said predetermined ink-jet printer (2),

said data conversion element converting said Input Image data by using said correction profiles to acquire output image data,

said predetermined ink-jet printer (2) including a printing element for spraying ink particles onto a medium to output a print based on said output image data acquired from said color conversion device (1).

**Patentansprüche**

1. Farbumwandlungsvorrichtung (1) zum Umwandeln von Eingangsbilddaten in Daten, die farblich an eine vorbestimmte Ausgabevorrichtung (2) angepasst sind, aufweisend:

   ein Speicherelement (12) zum Speichern von Standardprofilen zum Umwandeln eines Koordinatenwerts in einem Farbraum in einen farblich an die vorbestimmte Ausgabevorrichtung (2) angepassten Standardkoordinatenwert in einem CMYK-Farbraum;
   ein Korrekturprofilerlangungselement (104) zum Erlangen von Korrekturprofilen zum Umwandeln eines Koordinatenwerts in dem Farbraum in einen Korrekturkoordinatenwert in einem CMYK-Farbraum auf der Grundlage von den Standardprofilen,
   wobei das Korrekturprofilerlangungselement (104) umfasst
   ein Kandidatenkoordinatenwertextrahierungselement (411) zum Extrahieren eines Kandidatenkoordinatenwerts, wobei der Kandidatenkoordinatenwert ein Koordinatenwert ist, der einen K-Komponentenwert hat, der größer als ein K-Komponentenwert des Standardkoordinatenwerts ist, einen C-Komponentenwert hat, der kleiner als ein C-Komponentenwert des Standardkoordinatenwerts ist, einen M-Komponentenwert hat, der kleiner als ein M-Komponentenwert des Standardkoordinatenwerts ist, und einen Y-Komponentenwert hat, der kleiner als ein Y-Komponentenwert des Standardkoordinatenwerts ist, wobei der Kandidatenkoordinatenwert ein Koordinatenwert ist, so dass eine Farbdifferenz von dem Standardkoordinatenwert kleiner als ein vorbestimmter Wert ist, wobei der Kandidatenkoordinatenwert ein Koordinatewert ist, so dass das kleinste Element aus den C-, M- und Y-Komponentenwerten kleiner als ein zweiter vorbestimmter Wert ist,
   ein Maximum-K-Komponentenwerterlangungselement (412) zum Erlangen des K-Komponentenwerts des Kandidatenkoordinatenwerts als ein Maximum-K-Komponentenwert,
   ein Korrektur-K-Komponentenwerterlangungselement (42) zum Erlangen eines dritten vorbestimmten Werts, der in dem Bereich zwischen dem K-Komponentenwert des Standardkoordinatenwerts und dem Maximum-K-Komponentenwert liegt, als einen Korrektur-K-Komponentenwert,
   ein Finalkandidatenkoordinatenwertextrahierungselement (431) zum Extrahieren von Finalkandidatenkoordinatenwerten, wobei jeder der Finalkandidatenkoordinatenwerte ein Koordinatenwert ist, der einen K-Komponentenwert hat, der dem Korrektur-K-Komponentenwert gleich ist, einen C-Komponentenwert hat, der kleiner als der C-Komponentenwert des Standardkoordinatenwerts ist, einen M-Komponentenwert hat, der kleiner als der M-Komponentenwert des Standardkoordinatenwerts ist, und einen Y-Komponentenwert hat, der kleiner als der Y-Komponentenwert des Standardkoordinatenwerts ist, und
   ein Korrekturkoordinatenwerterlangungselement (43) zum Erlangen eines Koordinatenwerts, so dass der Farbunterschied von dem Standardkoordinatenwert das kleinste Element aus allen der Finalkandidatenkoordinatenwerte als ein Korrekturkoordinatenwert entsprechend dem Standardkoordinatenwert ist; und
   ein Datenumwandlungselement (102) zum Umwandeln der Eingangsbilddaten unter Verwendung der Korrekturprofile.

2. Farbumwandlungsvorrichtung (1) gemäß Anspruch 1, wobei
   das Korrektur-K-Komponentenwerterlangungselement (42) umfasst:

   ein K-Komponentenersatzprozentfestlegungselement (421) zum Festlegen eines K-Komponentenersatzprozentsatzes im Ansprechen auf eine Eingabebetätigung von einem Benutzer, wobei der K-Komponentenersatzprozentsatz ein Wert ist, der definiert, in welchem Ausmaß der K-Komponentenwert des Korrekturkoordinatenwerts von dem K-Komponentenwert des Standardkoordinatenwerts erhöht wird; und
   ein Korrektur-K-Komponentenwertberechnungselement (422) zum Berechnen des Korrektur-K-Komponentenwerts auf der Grundlage des K-Komponentenersatzprozentsatzes.

3. Farbumwandlungsvorrichtung (1) gemäß Anspruch 2, wobei
   das K-Komponentenersatzprozentsatzfestlegungselement (421) den K-Komponentenersatzprozentsatz bei unterschiedlichen Werten in Abhängigkeit von Farbtönen festlegt.

4. Farbumwandlungsvorrichtung (1) gemäß Anspruch 3, wobei,
   das K-Komponentenersatzprozentsatzfestlegungselement (421) umfasst:

   ein Farbtonersatzprozentsatzfestlegungselement (421a) zum Festlegen des Werts des K-Komponentenersatzprozentsatzes für jeden vorbestimmten Farbtonbereich; und
   ein Ersatzprozentsatzinterpolationselement (4212a) zum Festlegen des K-Komponentenersatzprozentsatzes für einen Grenzbereich zwischen angrenzenden Farbtonbereichen bei einem Wert, der durch eine lineare Interpolation zwischen den Werten des K-Komponentenersatzprozentsatzes berechnet wird, der für die jeweiligen angrenzenden Farbtonbereiche festgelegt ist, wenn der K-Komponentenersatzprozentsatz bei unterschiedlichen Werten für die angrenzenden Farbtonbereiche festgelegt ist.

5. Farbumwandlungsvorrichtung (1) gemäß einem der Ansprüche 2 bis 4, wobei
   das K-Komponentenersatzprozentsatzfestlegungselement (421) den K-Komponentenersatzprozentsatz bei unterschiedlichen Werten in Abhängigkeit von einer Farbsättigung festlegt, und den K-Komponentenersatzprozentsatz für einen vorbestimmten achromatischen Bereich bei einem maximal möglichen Wert, der als der K-Komponentenersatzprozentsatz verwendet wird, festlegt.

6. Farbumwandlungsverfahren, welches Eingangsbilddaten in Daten umwandelt, die farblich auf eine vorbestimmte Ausgabevorrichtung (2) angepasst sind, wobei das Verfahren die folgenden Schritte aufweist:

   a) Erlangen von Standardprofilen (S11) zum Umwandeln eines Koordinatenwerts in einem Farbraum in einen Standardkoordinatenwert in einem CMYK-Farbraum, der farblich an das vorbestimmte Ausgabegerät (2) angepasst ist;
   b) Erlangen von Korrekturprofilen (S12) zum Umwandeln eines Koordinatenwerts in dem Farbraum in einen Korrekturkoordinatenwert in einem CMYK-Farbraum auf der Grundalge von Standardprofilen,
   wobei der Schritt b) die folgenden Schritte umfasst

   b-1) Extrahieren eines Kandidatenkoordinatenwerts (S211), wobei der Kandidatenkoordinatenwert ein Koordinatenwert ist, der einen K-Komponentenwert hat, der größer als ein K-Komponentenwert des Standardkoordinatenwerts ist, einen C-Komponentenwert hat, der kleiner als ein C-Komponentenwert des Standardkoordinatenwerts ist, einen M-Komponentenwert hat, der kleiner als ein M-Komponentenwert des Standardkoordinatenwerts ist, und einen Y-Komponentenwert hat, der kleiner als ein Y-Komponentenwert des Standardkoordinatenwerts ist, wobei der Kandidatenkoordinatenwert ein Koordinatenwert ist, so dass ein Farbunterschied von dem Standardkoordinatenwert kleiner als ein erster vorbestimmter Wert ist, wobei der Standardkoordinatenwert ein Koordinatenwert ist, so dass das kleinste Element aus den C-, M- und Y-Komponentenwerten kleiner als ein zweiter vorbestimmter Wert ist,
   b-2) Erlangen des K-Komponentenwerts (S214) des Kandidatenkoordinatenwerts als ein Maximum-K-Komponentenwert,
   b-3) Erlangen eines dritten vorbestimmten Werts, der in dem Bereich zwischen dem K-Komponentenwert des Standardkoordinatenwerts und dem Maximum-K-Komponentenwert liegt, als einen Korrektur-K-Komponentenwert,
   b-4) Extrahieren von Finalkandidatenkoordinatenwerten (S241), wobei jeder der Finalkandidatenkoordinatenwerte ein Koordinatenwert ist, der einen K-Komponentenwert hat, der dem Korrektur-K-Komponentenwert gleicht, einen C-Komponentenwert hat, der kleiner als der C-Komponentenwert des Standardkoordinatenwerts ist, einen M-Komponentenwert hat, der kleiner als der M-Komponentenwert des Standardkoordinatenwerts ist, und einen Y-Komponentenwert hat, der kleiner als der Y-Komponentenwert des Standardkoordinatenwerts ist, und
   b-5) Erlangen eines Koordinatenwerts (S242), so dass der Farbunterschied von dem Standardkoordinatenwert das kleinste Element von allen der Finalkandidatenkoordinatenwerte als ein Korrekturkoordinatenwert entsprechend dem Standardkoordinatenwert ist; und

   c) Umwandeln der Eingangsbilddaten unter Verwendung der Korrekturprofile.

7. Computerlesbares Aufzeichnungsmedium zum Speichern eines Programms, welches in einem Computer mit einer CPU und einem Speicher gespeichert ist, wobei das Programm durch den Computer zur Ausführung des Verfahrens gemäß Anspruch 6 ausgeführt wird.

8. Bilderstellungssystem, aufweisend:

   einen vorbestimmten Tintenstrahldrucker (2); und
   eine Farbumwandlungsvorrichtung (1) gemäß Anspruch 1 zum Umwandeln von Eingangsbilddaten in Daten, die farblich an den vorbestimmten Tintenstrahldrucker (2) angepasst sind,
   wobei das Datenumwandlungselement die Eingangsbilddaten unter Verwendung der Korrekturprofile zur Erlangung von Ausgangsbilddaten umwandelt, wobei der vorbestimmte Tintenstrahldrucker (2) umfasst

ein Druckelement zum Sprühen von Tintenpartikeln auf ein Medium zur Ausgabe eines Drucks auf der Grundlage der Ausgangsbilddaten, die von der Farbumwandlungsvorrichtung (1) erlangt werden.

**Revendications**

1. Dispositif de conversion de couleurs (1) permettant de convertir des données d'image d'entrée en données dont les couleurs sont contretypées à un dispositif de sortie prédéterminé (2), comprenant :

   un élément de stockage (12) pour y stocker des profils standards afin de convertir une valeur de coordonnées dans un espace colorimétrique en une valeur de coordonnées standard dans un espace colorimétrique CMJN dont les couleurs sont contretypées audit dispositif de sortie prédéterminé (2) ;
   un élément d'acquisition (104) de profils de correction pour obtenir des profils de correction afin de convertir une valeur de coordonnées dans ledit espace colorimétrique en une valeur de coordonnées de correction dans un espace colorimétrique CMJN, sur la base desdits profils standards,
   ledit élément d'acquisition (104) de profils de correction comportant
   un élément d'extraction (411) de valeur de coordonnées candidate pour extraire une valeur de coordonnées candidate, ladite valeur de coordonnées candidate étant une valeur de coordonnées ayant une valeur de composante N supérieure à une valeur de composante N de ladite valeur de coordonnées standard, une valeur de composante C inférieure à une valeur de composante C de ladite valeur de coordonnées standard, une valeur de composante M inférieure à une valeur de composante M de ladite valeur de coordonnées standard et une valeur de composante J inférieure à une valeur de composante J de ladite valeur de coordonnées standard, ladite valeur de coordonnées candidate étant une valeur de coordonnées telle qu'une différence de couleurs de ladite valeur de coordonnées standard soit inférieure à une première valeur prédéterminée, ladite valeur de coordonnées candidate étant une valeur de coordonnées telle que la valeur minimale de ses valeurs de composantes C, M et J soit inférieure à une deuxième valeur prédéterminée,
   un élément d'acquisition (412) de valeur de composante N maximale pour obtenir la valeur de composante N de ladite valeur de coordonnées candidate en tant que valeur de composante N maximale,
   un élément d'acquisition (42) de valeur de composante N de correction pour obtenir une troisième valeur prédéterminée comprise entre la valeur de composante N de ladite valeur de coordonnées standard et ladite valeur de composante N maximale en tant que valeur de composante N de correction,
   un élément d'extraction (431) de valeurs de coordonnées candidates finales pour extraire des valeurs de coordonnées candidates finales, chacune desdites valeurs de coordonnées candidates finales étant une valeur de coordonnées ayant une valeur de composante N égale à ladite valeur de composante N de correction, une valeur de composante C inférieure à la valeur de composante C de ladite valeur de coordonnées standard, une valeur de composante M inférieure à la valeur de composante M de ladite valeur de coordonnées standard et une valeur de composante J inférieure à la valeur de composante J de ladite valeur de coordonnées standard, et
   un élément d'acquisition (43) de valeur de coordonnées de correction pour obtenir une valeur de coordonnées telle que la différence de couleurs de ladite valeur de coordonnées standard soit la valeur minimale parmi toutes lesdites valeurs de coordonnées candidates finales comme valeur de coordonnées de correction correspondant à ladite valeur de coordonnées standard ; et
   un élément de conversion de données (102) pour convertir lesdites données d'image d'entrée en utilisant lesdits profils de correction.

2. Dispositif de conversion de couleurs (1) selon la revendication 1, dans lequel
   ledit élément d'acquisition (42) de valeur de composante N de correction comporte :

   un élément de réglage (421) de pourcentage de remplacement de composante N pour régler un pourcentage de remplacement de composante N en réponse à une manipulation d'entrée d'un utilisateur, ledit pourcentage de remplacement de composante N étant une valeur définissant dans quelle mesure la valeur de composante N de ladite valeur de coordonnées de correction doit être augmentée à partir de la valeur de composante N de ladite valeur de coordonnées standard ; et
   un élément de calcul (422) de valeur de composante N de correction pour calculer ladite valeur de composante N de correction, sur la base dudit pourcentage de remplacement de composante N.

3. Dispositif de conversion de couleurs (1) selon la revendication 2, dans lequel
   ledit élément de réglage (421) de pourcentage de remplacement de composante N règle ledit pourcentage de remplacement de composante N à des valeurs différentes en fonction des teintes.

**4.** Dispositif de conversion de couleurs (1) selon la revendication 3, dans lequel
ledit élément de réglage (421) de pourcentage de remplacement de composante N comporte :

un élément de réglage (421a) de pourcentage de remplacement de teinte pour régler la valeur dudit pourcentage de remplacement de composante N pour chaque zone de teinte prédéterminée; et
un élément d'interpolation (4212a) de pourcentage de remplacement pour régler ledit pourcentage de remplacement de composante N pour une zone limite entre des zones de teinte adjacentes à une valeur calculée par interpolation linéaire entre les valeurs dudit pourcentage de remplacement de composante N réglé pour les zones de teinte adjacentes respectives lorsque ledit pourcentage de remplacement de composante N est réglé à des valeurs différentes pour les zones de teinte adjacentes.

**5.** Dispositif de conversion de couleurs (1) selon l'une quelconque des revendications 2 à 4, dans lequel
ledit élément de réglage (421) de pourcentage de remplacement de composante N règle ledit pourcentage de remplacement de composante N à des valeurs différentes en fonction de la chromie, et règle ledit pourcentage de remplacement de composante N pour une zone achromatique prédéterminée à une valeur maximale possible prise comme étant ledit pourcentage de remplacement de composante N.

**6.** Procédé de conversion de couleurs qui convertit des données d'image d'entrée en données dont les couleurs sont contretypées à un dispositif de sortie prédéterminé (2), ledit procédé comprenant les étapes qui consistent :

a) à obtenir des profils standard (S11) pour convertir une valeur de coordonnées dans un espace colorimétrique en une valeur de coordonnées standard dans un espace colorimétrique CMJN dont les couleurs sont contretypées à ladite unité de sortie prédéterminé (2) ;
b) à obtenir des profils de correction (S12) pour convertir une valeur de coordonnées dans ledit espace colorimétrique en une valeur de coordonnées de correction dans un espace colorimétrique CMJN, sur la base desdits profils standards,
ladite étape b) comportant les étapes qui consistent

b-1) à extraire une valeur de coordonnées candidate (S211), ladite valeur de coordonnées candidate étant une valeur de coordonnées ayant une valeur de composante N supérieure à une valeur de composante N de ladite valeur de coordonnées standard, une valeur de composante C inférieure à une valeur de composante C de ladite valeur de coordonnées standard, une valeur de composante M inférieure à une valeur de composante M de ladite valeur de coordonnées standard et une valeur de composante J inférieure à une valeur de composante J de ladite valeur de coordonnées standard, ladite valeur de coordonnées candidate étant une valeur de coordonnées telle qu'une différence de couleurs de ladite valeur de coordonnées standard soit inférieure à une première valeur prédéterminée, ladite valeur de coordonnées candidate étant une valeur de coordonnées telle que la valeur minimale de ses valeurs de composantes C, M et J soit inférieure à une deuxième valeur prédéterminée ,
b-2) à obtenir la valeur de composante N (S214) de ladite valeur de coordonnées candidate en tant que valeur de composante N maximale,
b-3) à obtenir une troisième valeur prédéterminée comprise entre la valeur de composante N de ladite valeur de coordonnées standard et ladite valeur de composante N maximale en tant que valeur de composante N de correction,
b-4) à extraire des valeurs de coordonnées candidates finales (S241), chacune desdites valeurs de coordonnées candidates finales étant une valeur de coordonnées ayant une valeur de composante N égale à ladite valeur de composante N de correction, une valeur de composante C inférieure à la valeur de composante C de ladite valeur de coordonnées standard, une valeur de composante M inférieure à la valeur de composante M de ladite valeur de coordonnées standard et une valeur de composante J inférieure à la valeur de composante J de ladite valeur de coordonnées standard, et
b-5) à obtenir une valeur de coordonnées (S242) telle que la différence de couleurs de ladite valeur de coordonnées standard soit la valeur minimale parmi toutes lesdites valeurs de coordonnées candidates finales comme étant une valeur de coordonnées de correction correspondant à ladite valeur de coordonnées standard ; et

c) à convertir lesdites données d'image d'entrée en utilisant lesdits profils de correction.

**7.** Support d'enregistrement lisible par ordinateur permettant de stocker un programme qui est stocké dans un ordinateur comportant une CPU et une mémoire, ledit programme étant exécuté par ledit ordinateur afin de mettre en oeuvre le procédé selon la revendication 6.

8. Système de formation d'image comprenant:

une imprimante à jet d'encre prédéterminée (2) ; et
un dispositif de conversion de couleurs (1) selon la revendication 1 pour convertir des données d' image d'entrée en des données dont les couleurs sont contretypées à ladite imprimante à jet d'encre prédéterminée (2),
ledit élément de conversion de données convertissant lesdites données d' image d'entrée en utilisant lesdits profils de correction pour obtenir des données d'image de sortie,
ladite imprimante à jet d'encre prédéterminée (2) comportant
un élément d' impression pour pulvériser des particules d'encre sur un support afin d'obtenir en sortie une impression sur la base desdites données d' image de sortie acquises à partir dudit dispositif de conversion de couleurs (1).

F I G . 1

CONTROLLER    11

CPU    11a

ROM    11b

RAM    11c

STORAGE PART    12

PROGRAM    121

MANIPULATION PART    13

DISPLAY PART    14

R/W PART    15

MEDIA READER/WRITER    151

RECORDING MEDIUM    Me

PRINTER INTERFACE    16

COMMUNICATION PART    17

N

PRINTER    2

100

FIG. 2

F I G . 3

```
┌─────────────────────────────────┐
│      STANDARD COORDINATE VALUE   │
│        Qi(Cq,Mq,Yq,Kq)           │──T2
│          (i=1,2,…)               │
└─────────────────────────────────┘
                │
                ▼
┌─────────────────────────────────┐
│      CANDIDATE COORDINATE VALUE  │
│          EXTRACTION PART         │
│  ┌ ─ ─ ─ ─ ─ ─ ─ ─ ─ ─ ─ ─ ─ ─┐ │
│  │ FIRST CANDIDATE COORDINATE  │ │
│  │      VALUE                  │ │
│  │    S1(Cs1,Ms1,Ys1,Ks1)      │ │
│  └ ─ ─ ─ ─ ─ ─ ─ ─ ─ ─ ─ ─ ─ ─┘ │
│  ┌ ─ ─ ─ ─ ─ ─ ─ ─ ─ ─ ─ ─ ─ ─┐ │──411
│  │ SECOND CANDIDATE COORDINATE │ │
│  │      VALUE                  │ │
│  │    S2(Cs2,Ms2,Ys2,Ks2)      │ │
│  └ ─ ─ ─ ─ ─ ─ ─ ─ ─ ─ ─ ─ ─ ─┘ │
│  ┌ ─ ─ ─ ─ ─ ─ ─ ─ ─ ─ ─ ─ ─ ─┐ │
│  │ THIRD CANDIDATE COORDINATE  │ │
│  │      VALUE                  │ │
│  │    S3(Cs3,Ms3,Ys3,Ks3)      │ │
│  └ ─ ─ ─ ─ ─ ─ ─ ─ ─ ─ ─ ─ ─ ─┘ │
└─────────────────────────────────┘
```

$S1(Cs1,Ms1,Ys1,Ks1)$

$S2(Cs2,Ms2,Ys2,Ks2)$

$S3(Cs3,Ms3,Ys3,Ks3)$

**MAXIMUM K COMPONENT VALUE ACQUISITION PART** — 412

MAXIMUM K COMPONENT VALUE KM

**REPLACEMENT PERCENTAGE SETTING PART** — 421

REPLACEMENT PERCENTAGE REP

**K COMPONENT VALUE CALCULATION PART** — 422

K COMPONENT VALUE Kr

**CANDIDATE COORDINATE VALUE EXTRACTION PART** — 431

FINAL CANDIDATE COORDINATE VALUE
$Ti(Ct,Mt,Yt,Kt)$

**CMY COMPONENT VALUE ACQUISITION PART** — 432

CORRECTION COORDINATE VALUE
$Ri(Cr,Mr,Yr,Kr)$

**CORRECTION COORDINATE VALUE**
$Ri(Cr,Mr,Yr,Kr)$
$(i=1,2,…)$ — TC

F I G . 4

# FIG. 5

REPLACEMENT PERCENTAGE

0%        100%

E11

E12

OK

E

F I G . 6

```
                    ┌─────────────┐
                    │    START    │
                    └──────┬──────┘
                           │
                           ▼              ╭S11
              ┌────────────────────────┐
              │   EXTRACT  STANDARD     │
              │   COORDINATE  VALUE     │
              └────────────┬───────────┘
                           │              ╭S12
              ┌────────────▼───────────┐
              │  CALCULATE  CORRECTION  │
              │   COORDINATE  VALUE     │
              └────────────┬───────────┘
                           │              ╭S13
         ┌─────────────────▼────────────────────┐
         │STORE CORRECTION COORDINATE VALUE      │
         │ASSOCIATED WITH PREDETERMINED INPUT    │
         │VALUE IN CORRECTION TABLE              │
         └─────────────────┬────────────────────┘
                           │
                           ▼          ╭S14
                   ╱               ╲
                  ╱      ARE         ╲
                 ╱ CORRECTION COORDINATE╲   N
                ╱ VALUES CORRESPONDING   ╲────
                ╲ TO ALL STANDARD        ╱
                 ╲ COORDINATE VALUES    ╱
                  ╲   ACQUIRED?        ╱
                   ╲               ╱
                       │ Y
                       ▼
                ┌─────────────┐
                │     END     │
                └─────────────┘
```

# F I G . 7

START

SPECIFY MAXIMUM K COMPONENT VALUE — S21

EXTRACT FIRST CANDIDATE COORDINATE VALUES — S211

EXTRACT SECOND CANDIDATE COORDINATE VALUES FROM AMONG FIRST CANDIDATE COORDINATE VALUES — S212

EXTRACT THIRD CANDIDATE COORDINATE VALUES FROM AMONG SECOND CANDIDATE COORDINATE VALUES — S213

ACQUIRE MAXIMUM K COMPONENT VALUE — S214

DETERMINE REPLACEMENT PERCENTAGE — S22

CALCULATE K COMPONENT VALUE OF CORRECTION COORDINATE VALUE — S23

ACQUIRE CORRECTION COORDINATE VALUE — S24

EXTRACT FINAL CANDIDATE COORDINATE VALUES — S241

ACQUIRE COORDINATE VALUE SUCH THAT COLOR DIFFERENCE FROM STANDARD COORDINATE VALUE IS MINIMUM OF ALL FINAL CANDIDATE COORDINATE VALUES AS CORRECTION COORDINATE VALUE — S242

END

FIG. 8

INPUT IMAGE DATA ACQUISITION PART — 101

COLOR CONVERSION PROCESSING PART — 102

OUTPUT IMAGE DATA ACQUISITION PART — 103

STORAGE PART — 12

STANDARD PROFILES — P
- FIRST TABLE — T1
- SECOND TABLE — T2

CORRECTION PROFILES — PC
- CORRECTION TABLE — TC

CORRECTION PROFILE ACQUISITION PART — 104

MAXIMUM K COMPONENT VALUE SPECIFICATION PART — 41
- CANDIDATE COORDINATE VALUE EXTRACTION PART — 411
  - FIRST EXTRACTION PART — 411a
  - SECOND EXTRACTION PART — 411b
  - THIRD EXTRACTION PART — 411c
- MAXIMUM K COMPONENT VALUE ACQUISITION PART — 412

K COMPONENT VALUE DETERMINATION PART — 42a
- REPLACEMENT PERCENTAGE SETTING PART — 421a (421b)
  - REPLACEMENT PERCENTAGE ACCEPTANCE PART — 4211a (4211b)
  - INTERMEDIATE REPLACEMENT PERCENTAGE CALCULATION PART — 4212a (4212b)
- K COMPONENT VALUE CALCULATION PART — 422a

CORRECTION COORDINATE VALUE ACQUISITION PART — 43
- CANDIDATE COORDINATE VALUE EXTRACTION PART — 431
- CMY COMPONENT VALUE ACQUISITION PART — 432

1a

# F I G . 9

REPLACEMENT PERCENTAGE

0%

100%

E21

E22

E20

HUE SELECTION

REPLACEMENT PERCENTAGE

0%

100%

E23

E24

OK

Ea

EP 2 012 525 B1

## FIG. 10A

## FIG. 10B

F I G . 1 1

START

```
                                              S31
┌──────────────────────────────────────────────┐
│ SPECIFY HUE REGION TO WHICH CORRECTION         │
│ COORDINATE VALUE BELONGS                        │
└──────────────────────────────────────────────┘

                                              S32
┌──────────────────────────────────────────────┐
│ ACQUIRE VALUE OF REPLACEMENT PERCENTAGE        │
│ SET FOR SPECIFIED HUE REGION                    │
└──────────────────────────────────────────────┘

                                              S33
┌──────────────────────────────────────────────┐
│ CALCULATE K COMPONENT VALUE OF                  │
│ CORRECTION COORDINATE VALUE                     │
└──────────────────────────────────────────────┘
```

END

F I G . 1 2 A

REPLACEMENT PERCENTAGE

F I G . 1 2 B

REPLACEMENT PERCENTAGE

**EP 2 012 525 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006148747 A
- JP 2006 A
- JP 148747 A
- US 5999703 A
- US 6236817 B1
- JP 2004080266 A